# EUROPÄISCHE PATENTSCHRIFT

(11) **EP 2 694 377 B1**
(45) Veröffentlichungstag und Bekanntmachung des Hinweises auf die Patenterteilung: **20.01.2016**
(21) Anmeldenummer: 12717646.9
(22) Anmeldetag: 19.04.2012
(51) Int. Cl.: B65B 11/46, B65B 35/24, B65B 35/26

(54) **VERFAHREN UND VORRICHTUNG ZUM VERPACKEN STREIFENFÖRMIGER GEGENSTÄNDE, INSBESONDERE KAUGUMMISTREIFEN**
METHOD AND DEVICE FOR PACKING STRIP-TYPE OBJECTS, ESPECIALLY STRIPS OF CHEWING GUM
PROCÉDÉ ET DISPOSITIF D'EMBALLAGE D'OBJETS EN FORME DE BANDES, EN PARTICULIER DE TABLETTES DE CHEWING-GUM

(30) Priorität: 06.05.2011 DE 102011075439
(43) Veröffentlichungstag der Anmeldung: 12.02.2014
(73) Patentinhaber: Loesch Verpackungstechnik GmbH, 96146 Altendorf (DE)
(72) Erfinder: HAMMACHER, Heinz-Peter, 96049 Bamberg (DE); DRESSLER, Bernhard, 91301 Forchheim (DE)
(74) Vertreter: Prüfer & Partner mbB European Patent Attorneys
(86) Internationale Anmeldenummer: PCT/EP2012/057145
(87) Internationale Veröffentlichungsnummer: WO 2012/152557

(56) Entgegenhaltungen:
- US-A- 2 807 390
- US-A- 3 933 064
- US-A- 5 309 697
- US-A1- 2010 307 106

## Beschreibung

Die Erfindung betrifft ein Verfahren und eine Vorrichtung zum Verpacken streifenförmiger Gegenstände, insbesondere zum Verzehr geeigneter Gegenstände, insbesondere Kaugummistreifen. Die Erfindung betrifft außerdem ein Verfahren und eine Vorrichtung zum Herstellen derartiger einzelner streifenförmiger Gegenstände.

Im Stand der Technik sind Verfahren und Vorrichtungen zum Herstellen von streifenförmigen Gegenständen, insbesondere von Kaugummistreifen bzw. Streifenkaugummis, sowie Verfahren und Vorrichtungen zum Verpacken dieser streifenförmigen Gegenstände bekannt. In konkreten Ausführungsformen sind insbesondere Verpackungsmaschinen und -anlagen für Kaugummis, insbesondere Kaugummistreifen, bekannt. Am Markt sind hierbei Kaugummistreifen mit unterschiedlichen Abmessungen gebräuchlich, die von den bekannten Maschinen verpackt werden können. Insbesondere sind am Markt relativ breite, lange Streifen mit geringer Dicke (sogen. "stick gum") oder im Vergleich dazu schmalere und kürzere Streifen bekannt, die aber eine größere Dicke aufweisen (sogen. "tab gum"). Daneben gibt es am Markt auch weitere Formate für Kaugummistreifen bzw. Streifenkaugummis.

Das Dokument US 2010/307106 A, sowie US 5 309 697 A zeigen verfahren und Vorrichtungen zum Verpacken von Kaugummistreifen.

Das Dokument US 2 807 390 A offenbart eine Vorrichtung zum Trennen von Kaugummistreifen von gerillten Platten.

Sofern nachfolgend von Kaugummis oder Kaugummistreifen bzw. Streifenkaugummis die Rede ist, ist dieses lediglich exemplarisch zu verstehen. Die vorliegende Erfindung bezieht sich neben Kaugummis auf jegliche Art von streifenförmigen Gegenständen, insbesondere solchen Gegenständen, die zum menschlichen Verzehr geeignet sind. Hierbei kann es sich beispielsweise auch um Ge-bäck- oder Süßwarenprodukte und dergleichen handeln. Erfasst werden aber auch streifenförmige Produkte, die nicht zum Verzehr bestimmt sind, wie beispielsweise medizinische oder pharmazeutische Produkte, wie Diagnosestreifen und dergleichen. Wesentlich bei allen derartigen streifenförmigen Gegenständen ist es, dass die Gegenstände einzeln in einem Verpackungsmaterialstück verpackt werden und nach Weiterförderung und Bildung einer Gruppe von derart verpackten einzelnen streifenförmigen Gegenständen als Gruppe in einem weiteren Verpackungsmaterialstück verpackt werden.

Bei den bekannten Verfahren und Vorrichtungen zum Verpacken von streifenförmigen Gegenständen werden üblicherweise zunächst im Wesentlichen größere rechteckige Platten bereit gestellt, aus denen die streifenförmigen Gegenstände zu bilden sind. Dabei entspricht die Länge der kürzeren Seiten der rechteckigen Platten üblicherweise der Länge eines einzelnen der zu bildenden streifenförmigen Gegenstände. Bei den bekannten Verfahren und Vorrichtungen werden aus diesen bereit gestellten Platten sodann die einzelnen streifenförmigen Gegenstände gebildet und anschließend einzeln mit einem ersten Verpackungsmaterial verpackt. Bei den bekannten Maschinen werden diese einzelnen verpackten Streifen dann typischerweise zu einer Produktgruppe zusammen gefasst, wobei die gebildete Gruppe der verpackten Produktstreifen dann mit einem zweiten Verpackungsmaterial verpackt wird. Bei bekannten Kaugummiverpackungsmaschinen werden hierbei typischerweise fünf, sieben oder jede beliebige andere Anzahl von Kaugummistreifen, die zunächst jeweils für sich, einzeln verpackt werden, gestapelt in einer Gruppe weiter verpackt. Mehrere der so gebildeten verpackten Gruppen können dann zur Bildung geeigneter Verkaufseinheiten noch weiter gruppiert und verpackt werden.

Bei bekannten Kaugummi-Verpackungsmaschinen werden die größeren rechteckigen Produktplatten (sogen. "slabs") gestapelt in einem Magazin bereit gestellt, nach einander aus diesem entnommen und sukzessive an eine Fördereinrichtung übergeben. Die Fördereinrichtung transportiert die Platten dann zu einer Separierstation, in der die einzelnen Produktstreifen (Kaugummistreifen) aus der Platte gebildet werden, indem die Produktstreifen durch geeignete Separiereinrichtungen sukzessive und kontinuierlich von der zugeführten Platte abgetrennt werden. Die Fördereinrichtung, an die die einzeln aus dem Magazin entnommenen Produktplatten übergeben werden, ist typischerweise von einem kontinuierlich laufenden Ketten- oder Riemenförderer gebildet. Die übergebenen, auf den Ketten- oder Riemenförderer aufgelegten Platten werden hierbei beschleunigt und üblicherweise in ihrer Längsrichtung zu der Separierstation gefördert, wo sie jeweils auf die vorhergehende Platte treffen, indem sie insbesondere an dieser vorhergehenden Platte anstoßen und auf diese in Förderrichtung aufprallen. Die so lückenlos in Förderrichtung längs hintereinander liegenden Platten werden von der Riemen- oder Kettenfördereinrichtung vorgeschoben und so der Separiereinrichtung zugeführt, in der die einzelnen Produktstreifen von der jeweils vordersten Platte an ihrem vorderen, schmalen Ende abgetrennt werden.

Bei diesem Verfahren wird die aus dem Magazin entnommene, an die Fördereinrichtung übergebene Platte mit einer höheren Geschwindigkeit (sogen. Übergeschwindigkeit) zu der Separierstation hin gefördert, als es der Geschwindigkeit entspricht, mit der die einzelnen Produktstreifen an dem vorderen Ende der jeweils vordersten der hintereinander im Stau liegenden Platten abgetrennt und weiter gefördert werden. Diese Übergeschwindigkeit ist erforderlich, um die jeweils aus dem Magazin entnommene, nachfolgende Platte an die jeweils vorhergehende Platte aufzuschließen, d.h. die zunächst bestehende Lücke zwischen diesen zwei Platten in Förderrichtung der Kettenfördereinrichtung zu schließen. Sobald diese Lücke geschlossen ist, liegen die Platten lückenlos im Stau hintereinander, wobei sie von der mit Übergeschwindigkeit laufenden Fördereinrichtung weiter in Längsrichtung nach vorne geschoben werden.

Die Geschwindigkeit, mit der sich die Fördereinrichtung in Förderrichtung vorwärts bewegt, kann hierbei also deutlich höher sein als die Geschwindigkeit, mit der die einzelnen Produktstreifen in der Separiereinrichtung von der Platte abgetrennt und anschließend weiter gefördert werden (sogen. Maschinengeschwindigkeit). In typischen Anwendungsfällen kann die Geschwindigkeit der Fördereinrichtung der Platten beispielsweise um 30% oder 40% höher als die Maschinengeschwindigkeit sein. Da die Produktplatten im Stau vor der langsamer arbeitenden Separiereinrichtung liegen und dementsprechend effektiv nur mit der Geschwindigkeit der Separiereinrichtung vorgeschoben werden, läuft die schneller laufende Ketten- oder Riemenfördereinrichtung somit unter den gestauten Produktplatten hindurch. Dabei reibt die Fördereinrichtung dementsprechend an der Unterseite der Platten entlang, d.h. es existiert eine Friktion zwischen der langsamer geförderten Produktplatte und der schneller laufenden Fördereinrichtung. Dieses verursacht einerseits einen Materialabrieb an der Unterseite der Produktplatte, was eine unerwünschte Beschädigung der betreffenden Oberfläche der Produktplatte (z.B. Schleifspuren) mit sich bringen kann, und andererseits einen Verschleiß der Transportmedien, wie z.B. Ketten oder Riemen. Der erzeugte Produktabrieb führt darüber hinaus auch zu einer Verschmutzung der Maschine in diesem Bereich, was nachfolgend einen erhöhten Reinigungsbedarf mit sich bringt.

Zusätzlich zu der beschriebenen Riemen- oder Kettenfördereinrichtung, auf der die Produktplatten aufliegen, kann bei den bekannten Maschinen zusätzlich auch noch eine vergleichbare, prinzipiell gleich wirkende zusätzliche Fördereinrichtung vorgesehen sein, die über den Produktplatten angeordnet ist und die die Pröduktplatten somit an ihrer Oberseite ergreift und fördert (sögen. Oberförderer). Hierbei wird die Produktplatte typischerweise zwischen der unteren und der oberen Fördereinrichtung eingeklemmt und vorwärts bewegt. Aufgrund der im Staudruck hintereinander liegenden Produktplatten (wie oben beschrieben) wird die betreffende Platte hier somit von unten und von oben ergriffen, wobei die Fördereinrichtungen aufgrund ihrer üblichen Übergeschwindigkeit gegenüber der Maschinengeschwindigkeit an der Oberseite und der Unterseite der Platte entlang schleifen und somit einen Abrieb von der Produktplatte an ihrer Oberseite und ihrer Unterseite erzeugen, was in entsprechender Weise die oben genannten Probleme nach sich zieht.

Die Stärke des Abriebs und somit des Verschleißes der Platten hängen auch von der Beschaffenheit des Produktmaterials ab. Insbesondere bei Kaugummis können verschiedene Materialien verarbeitet werden, die insbesondere unterschiedliche Härtegrade haben. Je nach Materialbeschaffenheit sind die oben genannten, aus der Friktion und einem entsprechenden Materialabrieb resultierenden Probleme unterschiedlich groß.

Bei den bekannten Kaugummi-Verpackungsmaschinen weisen die oben genannten Separiereinrichtungen, die den einzelnen Kaugummistreifen von der zugeführten Platte abtrennen, typischerweise eine Brecherwalze oder dergleichen auf. Diese Brecherwalze hat an ihrem Umfang typischerweise Taschen oder andere geeignete Aufnahmen, in die die zugeführte Platte an ihrem vorderen Ende eingeführt wird. Durch eine Rotation der Brecherwalze dreht sich diese Aufnahmetasche aus der Ebene der Zuführung der Platte heraus und bricht dabei den gewünschten Streifen von der Platte ab. Dafür ist die Platte an dieser Stelle vorzugsweise mit einer quer verlaufenden Rille versehen, die eine Schwächungslinie in dem Material der Platte bildet und das Abbrechen des Streifens erleichtert. Die radiale Tiefe der Aufnahmetasche der Brecherwalze entspricht somit im Wesentlichen der Breite des zu bildenden Streifens, und die radial äußere Begrenzung der Aufnahmetasche, die die Brecherkante bildet, greift im Wesentlichen in die in der Platte vorhandene Querrille ein. Bei einer entsprechenden Rotationsrichtung der Brecherwalze wird der so gebildete Kaugummistreifen üblicherweise nach unten weggedrückt und hier an eine nachfolgende Fördereinrichtung übergeben. Dabei wird der Kaugummistreifen also aus der Ebene der Zuführung der Platte nach unten auf eine tiefer liegende Ebene gedrückt. Auch dieser Vorgang führt typischerweise zu einer Belastung und insbesondere einem Abrieb und Verschleiß des gebildeten Kaugummistreifens, mit entsprechender Verschmutzung des betroffenen Maschinenbereichs.

Bei der Zuführung der Platte mittels der oben beschriebenen Ketten- oder Riemenfördereinrichtungen oder vergleichbaren Fördereinrichtungen zu der Brecherwalze wird die Platte mehr oder weniger intermittierend zu der Brecherwalze zugeführt, indem die Platte mit ihrem vordersten Ende an den Anschlag in der Tasche der Brecherwalze prallt und dann kurzzeitig nahezu stillsteht, während der Streifen durch die Rotation der Brecherwalze abgebrochen wird, bis die nächste Aufnahmetasche bereitsteht, um den nächsten Abschnitt der Platte aufzunehmen. Auch während dieser Phase des kurzen Stillstands der Platte bewegen sich die o.g. Zuführeinrichtungen (Ketten- oder Riemenfördereinrichtungen) kontinuierlich weiter und reiben somit an den betreffenden Oberflächen dieser Platte. Auch dieses führt wiederum zu einem Materialabrieb mit den oben beschriebenen Nachteilen.

Die oben beschriebenen, bekannten Kaugummi-Verpackungsmaschinen arbeiten mit hoher Geschwindigkeit, wobei die Leistung aufgrund der oben beschriebenen mechanisch-physikalischen Bedingungen bisher typischerweise auf eine Erzeugung und Förderung von ca. 2.300 Artikeln pro Minute begrenzt ist (ein Artikel entspricht einem Kaugummistreifen). Diese Leistung wird für die heutigen Marktanforderungen inzwischen jedoch als zu gering angesehen.

Ausgehend von dem oben beschriebenen Stand der Technik und den dadurch bedingten Nachteilen und Problemen liegt der Erfindung die Aufgabe zugrunde, Maschinen zum Verpacken streifenförmiger Gegenstände, insbesondere Kaugummistreifen, zu schaffen, die eine höhere Leistung haben. Hierbei wird eine Leistung von z.B. ca. 4.000 Artikeln pro Minute angestrebt. Gleichzeitig soll eine schonendere Behandlung der gebildeten und zu verpackenden Produkte (Kaugummistreifen) realisiert werden, d.h. insbesondere Abrieb, Verschleiß und Beschädigung einerseits der Produkte, andererseits aber auch der Maschine, verringert oder verhindert werden, womit auch die genannten Folgeprobleme (Verschmutzung, Reinigungsbedarf, etc.) reduziert werden sollen. Darüber hinaus soll auch die Möglichkeit verbessert werden, Produkte mit unterschiedlichen Materialbeschaffenheiten zu verarbeiten, so z.B. Kaugummisorten mit einer weicheren Beschaffenheit. Schließlich sollen durch die Erfindung verbesserte Maschinen geschaffen werden, die eine höhere Prozesssicherheit gewährleisten, d.h. bei denen Probleme im Zuge der Förderung der Produkte durch die Maschine (z.B. Produktstau, Verstopfungen, Blockierungen, etc.) vermieden werden und bei denen die Ausschussrate aufgrund fehlerhafter Produkte verringert wird.

Diese Aufgabe wird erfindungsgemäß gelöst durch ein Verfahren und eine Vorrichtung zum Herstellen einzelner streifenförmiger Gegenstände, insbesondere zum Verzehr geeigneter Gegenstände, insbesondere Kaugummistreifen, sowie durch ein Verfahren und eine Vorrichtung zum Verpacken dieser streifenförmigen Gegenstände nach Anspruch 1 und Anspruch 6.

Erfindungsgemäß wird die Zuführung der einzelnen bereitgestellten Platten zu der Separiereinrichtung derart gesteuert, dass jede Platte formschlüssig, positionsgenau und lückenlos an die jeweils vorhergehende Platte anschließt, ohne dass die Platten in einem Förderstau bzw. unter einem Staudruck hintereinander liegen. Die Zuführung der Platten zu der Separiereinrichtung wird also so gesteuert, dass eine Lücke, die zwischen zwei aufeinander folgenden Platten aufgrund der Zuführung der Platten zu der Fördereinrichtung auf dieser zunächst vorliegt, derart geschlossen wird, dass die nachfolgende Platte an die vorhergehende Platte herangeführt wird, ohne dass die nachfolgende Platte auf die vorhergehende Platte aufprallt. Erfindungsgemäß läuft die Fördereinrichtung zur Zuführung der Platten zu der Separiereinrichtung somit nicht kontinuierlich mit einer im Wesentlichen konstanten Geschwindigkeit, insbesondere einer gegenüber der Geschwindigkeit der Weiterförderung nach der Separiereinrichtung (Maschinengeschwindigkeit) höheren Geschwindigkeit (Übergeschwindigkeit). Vielmehr wird die Geschwindigkeit der Fördereinrichtung zur Zuführung der Platten zu der Separiereinrichtung gesteuert, d.h. wechselweise erhöht und verringert, je nachdem in welcher Förderposition sich die jeweils geförderte Platte gerade befindet.

Erfindungsgemäß wird der einzelne streifenförmige Gegenstand des Weiteren im Wesentlichen in gerader Richtung (d.h. in Förderrichtung) von der Platte abgetrennt, insbesondere abgerissen, d.h. die zugeführte Platte und der von ihr abgetrennte streifenförmige Gegenstand liegen im Wesentlichen in der gleichen Ebene. Anders als bei den aus dem Stand der Technik bekannten Maschinen wird der einzelne Streifen somit nicht mehr von der Platte abgebrochen und dabei aus der Ebene der Zuführung der Platte herausbewegt, also nicht mehr in eine andere, nachfolgende Förderebene verlagert oder umgelenkt.

Diese erfindungsgemäßen Maßnahmen ermöglichen eine gegenüber dem Stand der Technik höhere Maschinenleistung bei gleichzeitig erhöhter Prozesssicherheit sowie gleichzeitig schonenderer Produktbehandlung.

In einer bevorzugten Ausführungsform der Erfindung besteht die Fördereinrichtung zum Zuführen der Platten zu der Separiereinrichtung aus einer ersten und einer zweiten Fördereinrichtung, wobei eine erste bereitgestellte Platte an die erste Fördereinrichtung übergeben und von dieser im Wesentlichen in ihrer Längsrichtung weitergefördert wird, und wobei eine der ersten Platte nachfolgende zweite bereitgestellte Platte an die zweite Fördereinrichtung übergeben und von dieser weitergefördert wird, und wobei dann eine der zweiten Platte nachfolgende nächste bereitgestellte Platte wiederum an die erste Fördereinrichtung übergeben und von dieser weitergefördert wird. Die erste und die zweite Fördereinrichtung sind dabei derart angeordnet und wirken derart zusammen, dass alle zugeführten Platten auf derselben Förderbahn gefördert werden, wobei die beiden Fördereinrichtungen im wesentlichen derart gesteuert werden, dass die geförderten Platten jeweils nach ihrer Zuführung zu der betreffenden Fördereinrichtung zuerst beschleunigt und anschließend wieder abgebremst werden, wodurch bewerkstelligt wird, dass jede Platte positionsgenau, formschlüssig und lückenlos an die ihr jeweils vorausgehende Platte anschließt. Die Fördereinrichtungen sind dabei insbesondere derart ausgebildet, dass sie die Platten im Wesentlichen ohne Gleitreibung fördern, d.h. ohne Relativbewegung zwischen der Platte und der Fördereinrichtung.

In einer weiteren bevorzugten Ausführungsform der Erfindung weisen die erste und die zweite Fördereinrichtung jeweils mindestens einen Förderriemen auf, auf dem die jeweilige Platte jeweils im Wesentlichen ohne Friktion (d.h. ohne Relativbewegung zu dem Förderriemen) aufliegt. Dabei hat der Förderriemen jeder Fördereinrichtung in dem Bereich der Auflage der Platte eine Erhöhung (bzw. größere Dicke) derart, dass die jeweils aufliegende Platte nicht den daneben angeordneten Förderriemen der jeweils anderen Fördereinrichtung berührt. Somit kann die auf dem Förderriemen der ersten Fördereinrichtung aufliegende Platte nicht über den benachbarten Förderriemen der zweiten Fördereinrichtung rutschen, der ggf. eine andere Geschwindigkeit hat. Auf diese Weise wird ein Abrieb und Verschleiß der geförderten Platten weitestgehend verhindert, da im Wesentlichen keine Relativbewegung zwischen der jeweils betroffenen Fördereinrichtung (Förderriemen) und der Platte gegeben ist und da keine Berührung und somit keine Reibung gegenüber der anderen, von der Platte nicht betroffenen Fördereinrichtung (Förderriemen) vorliegt.

In einer Ausführungsform der Erfindung weist die auf die von den ersten und zweiten Förderriemen gebildete Fördereinrichtung folgende Separierstation mehrere weitere, aufeinander folgende Fördereinrichtungen auf, die die zugeführten Platten und die daraus gebildeten einzelnen streifenförmigen Gegenstände ergreifen und weiterfördern, wobei die Fördergeschwindigkeiten dieser aufeinander folgenden Fördereinrichtungen in Förderrichtung zunehmen. Hierbei sind mehrere, beispielsweise drei, parallel zueinander angeordnete Walzenpaare in Förderrichtung hintereinander angeordnet, wobei die Rotationsgeschwindigkeit der aufeinander folgenden Walzenpaare in Förderrichtung zunimmt, und wobei der Abstand in Förderrichtung zwischen den Achsen der aufeinander folgenden Walzenpaare im Wesentlichen gleich der Breite des zu bildenden einzelnen streifenförmigen Gegenstands in Förderrichtung ist. Bei dieser Ausführungsform ergreift das erste Walzenpaar die zugeführte Platte, und die nachfolgenden Walzenpaare trennen aufgrund der Geschwindigkeitserhöhung gegenüber dem ersten Walzenpaar den streifenförmigen Gegenstand von der Platte ab.

In Förderrichtung hinter den mehreren Walzenpaaren ist eine sternförmige Fördereinrichtung vorgesehen, die um eine parallel zu den Drehachsen der Walzenpaare angeordnete Drehachse rotiert. Die sternförmige Fördereinrichtung ergreift den von den Walzenpaaren von der Platte abgetrennten streifenförmigen Gegenstand und beschleunigt diesen in Förderrichtung, um einen definierten, einheitlichen Abstand zwischen den einzelnen aufeinander folgenden streifenförmigen Gegenständen zu bilden. Dieser Abstand ist erforderlich, um den streifenförmigen Gegenstand zu der nachfolgenden ersten Verpackungsstation zuzuführen.

Durch das erfindungsgemäße Zusammenwirken der Separierstation mit den Fördereinrichtungen zum Zuführen der bereitgestellten Platte zu der Separierstation sowie durch die jeweilige erfindungsgemäße Ausgestaltung der Separierstation und der Zuführeinrichtungen, sowie durch das Zusammenwirken dieser Komponenten mit den weiteren Komponenten zum Verpacken der gebildeten streifenförmigen Gegenstände mit einem ersten Verpackungsmaterial, zum Bilden einer Gruppe der einzelnen verpackten streifenförmigen Gegenstände sowie zum Verpacken der gebildeten Gruppe der streifenförmigen Gegenstände mit einem zweiten Verpackungsmaterial kann insgesamt eine höhere Maschinenleistung als im Stand der Technik erreicht werden (z.B. ca. 4.000 Artikel pro Minute), bei gleichzeitig schonenderer Produktbehandlung und höherer Prozesssicherheit als bei den Maschinen des Standes der Technik.

Weitere Einzelheiten und Vorteile der Erfindung ergeben sich aus der nachfolgenden detaillierten Beschreibung eines Ausführungsbeispiels in Verbindung mit den beigefügten Zeichnungen.
Figur 1 zeigt eine schematische Seitenansicht der gesamten erfindungsgemäßen Verpackungsmaschine;
Figur 2 zeigt eine vergrößerte Seitenansicht der Plattenzuführeinrichtungen sowie der Separiereinrichtungen der erfindungsgemäßen Verpackungsmaschine;
Figur 3 zeigt eine perspektivische Ansicht der Plattenbereitstellungs- und -zuführeinrichtungen;
Figur 4 zeigt eine Seitenansicht der Plattenbereitstellungs- und -zuführeinrichtungen aus Figur 3 von hinten;
Figur 5 zeigt eine perspektivische, gesprengte Ansicht der Separiereinrichtungen;
Figur 6 zeigt eine Seitenansicht der Streifenverpackungseinrichtungen;
Figur 7 zeigt eine Seitenansicht der Gruppenbildungseinrichtungen und der sich daran anschließenden Gruppenverpackungseinrichtungen;
Figur 8 zeigt eine perspektivische Ansicht der Gruppenbildungseinrichtungen;
Figur 9 zeigt eine perspektivische Ansicht der Gruppenverpackungseinrichtungen.

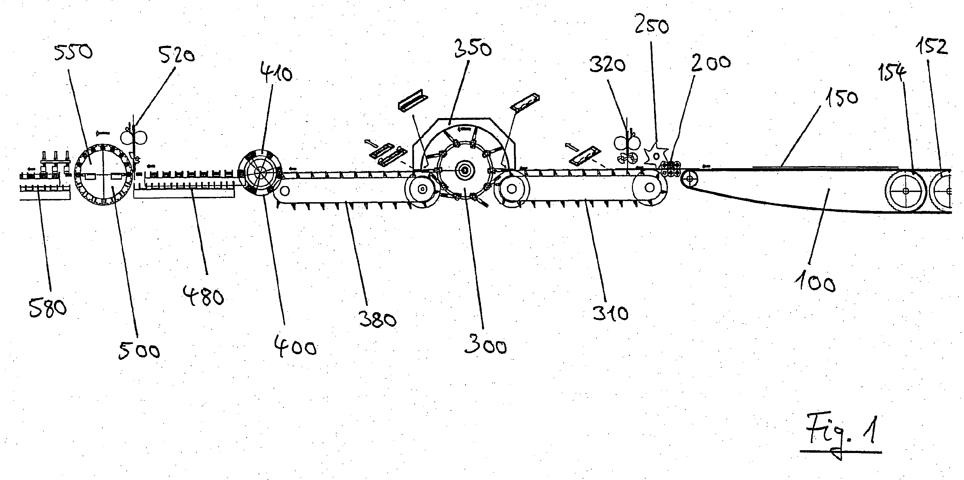

Figur 1 zeigt eine schematische Gesamtansicht einer Kaugummiverpackungsmaschine. In dieser Darstellung durchläuft das zu verpackende Produkt die Maschine von rechts nach links, wobei am rechten Ende dieser Förderstrecke eine Platte bereitgestellt und zugeführt wird, aus der die einzelnen Kaugummistreifen zu bilden sind, und wobei am linken Ende dieser Förderstrecke die gruppierten und verpackten Kaugummistreifen zur Weiterverarbeitung abgegeben werden. Es versteht sich, dass je nach Anwendungsfall und Ausführung der Maschine auch ein Produktfluss von links nach rechts möglich ist.

Hierbei wird eine Kaugummimaterialplatte P zunächst in den Plattenbereitstellungs- und -zuführeinrichtungen 100 bereitgestellt und dann zu den Separiereinrichtungen 200 zugeführt, in denen die einzelnen Kaugummistreifen S aus der Platte P gebildet werden. An die Separiereinrichtungen 200 schließen sich die Streifenverpackungseinrichtungen 300 an, in denen die gebildeten einzelnen Kaugummistreifen S in einem ersten Verpackungsmaterial V1 verpackt werden. Die so gebildeten, verpackten Kaugummistreifen VS werden dann den Gruppenbildungseinrichtungen 400 zugeführt, in denen Gruppen G der verpackten Kaugummistreifen VS gebildet werden. Die so gebildeten Gruppen G werden dann schließlich an Gruppenverpackungseinrichtungen 500 zugeführt, in denen die gebildeten Gruppen G der verpackten Kaugummistreifen VS in einem zweiten Verpackungsmaterial V2 verpackt werden. Die so gebildeten verpackten Streifengruppen VG werden dann zur Weiterverarbeitung abgegeben, beispielsweise für weitere Gruppierungen und/oder Verpackungen zur Bildung geeigneter Verkaufseinheiten.

Wie Figur 1 zeigt, durchläuft das zu verpackende Kaugummiprodukt die Maschine von rechts nach links im Wesentlichen in einer Ebene auf einer einheitlichen, linearen Förderbahn, ohne dass es hierbei zu seitlichen oder höhenmäßigen Ablenkungen des geförderten Produkts kommt. Bereits durch diese Maßnahme wird das Produkt wenig belastet und schonend behandelt. Im Folgenden werden die in Figur 1 in einer Übersicht gezeigten Einzelkomponenten der Verpackungsmaschine unter Bezugnahme auf die weiteren Zeichnungen detailliert beschrieben. Dabei geben die in den Zeichnungen dargestellten Pfeile die jeweiligen wesentlichen Bewegungs- oder Förderrichtungen an.

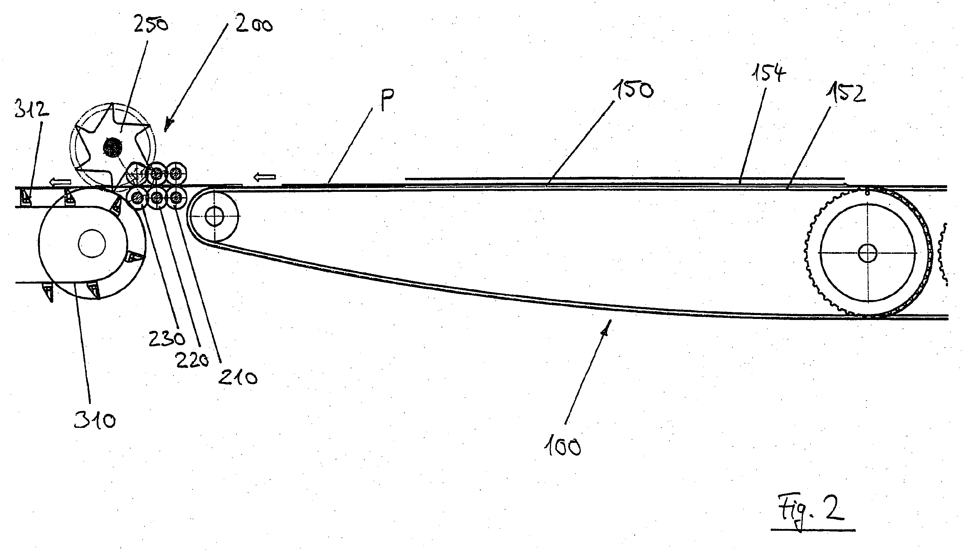

Die Figuren 2, 3 und 4 zeigen verschiedene Ansichten der Plattenbereitstellungs- und -zuführeinrichtungen 100. Die aus dem Kaugummimaterial gebildeten Platten P werden als Stapel PM in einem Magazin bereitgestellt. Dieses Magazin kann manuell oder automatisch mit neuen Platten P befüllt werden. Mit einer ersten Plattenschiebereinrichtung 112 wird die jeweils unterste Platte P aus dem Stapel PM heraus geschoben und mit einem zweiten Plattenschieber 114 zwischen zwei parallel zueinander angeordnete, gegenläufig rotierende Messerwalzen 120 geschoben. Die Messerwalzen 120 ergreifen die Platte P und geben sie hinter den Walzen 120 wieder aus. Die Messerwalzen 120 weisen auf ihrer Längsachse und/oder an ihrem Umfang mehrere Messer auf, die aufgrund der Rotation der Walzen Rillen R in den Platten P erzeugen. Der axiale Abstand zwischen zwei benachbarten Messern entspricht somit der Breite eines zu bildenden Kaugummistreifens S. Die Anzahl der Messer entspricht folglich der Anzahl der aus einer Platte P zu bildenden Streifen S, plus Eins. Die an der Längsachse bzw. am Umfang der Walzen 120 angeordneten Messer erzeugen dabei die Rillen R in der Platte P derart, dass sie die Platte P nicht durchschneiden, sondern in der Platte an ihrer Oberseite und/oder ihrer Unterseite rillenförmige Vertiefungen derart erzeugen, dass zwischen den beiderseitigen Rillen R noch eine dünne Materialschicht verbleibt.

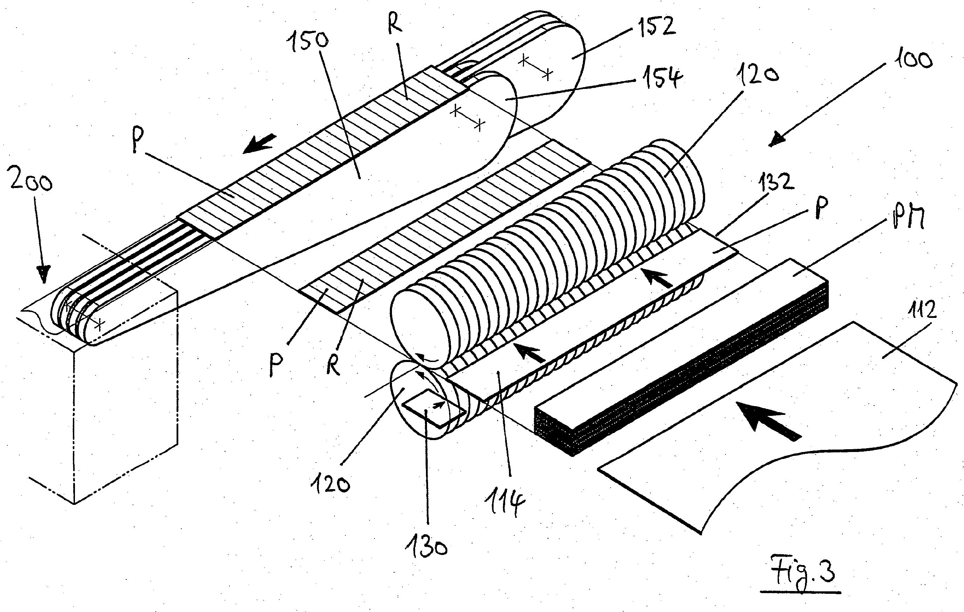

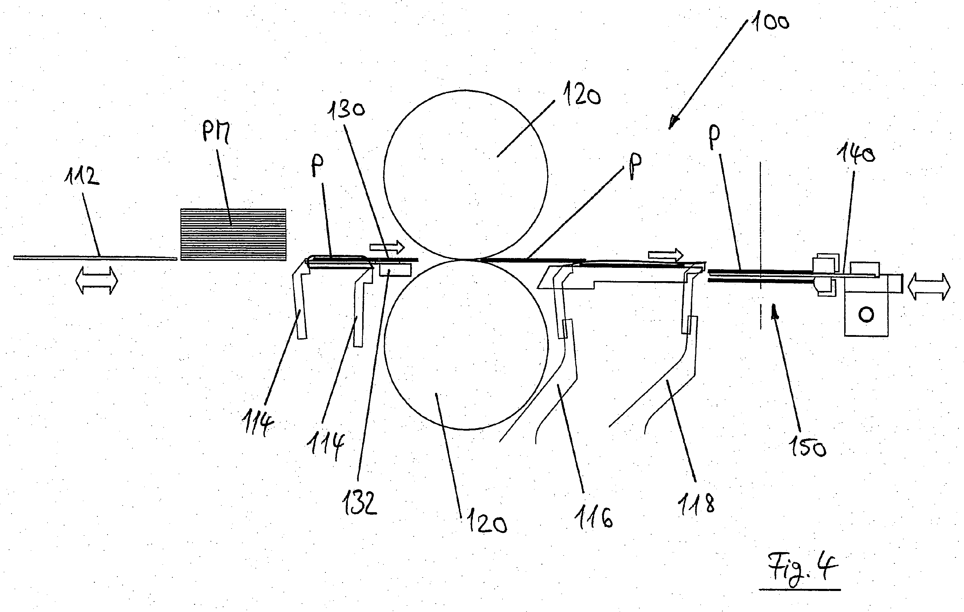

In Förderrichtung hinter den Messerwalzen 120 werden die gerillten Platten P dann von weiteren Plattenschiebereinrichtungen 116 übernommen und weitergefördert und schließlich an eine Fördereinrichtung 150 übergeben, die die Platte P zu den Separiereinrichtungen 200 befördert. Wie aus den Figuren 3 und 4 ersichtlich ist, werden die Platten P bis zur Übergabe an die Fördereinrichtung 150 im Wesentlichen in einer Richtung senkrecht zu ihrer Längsrichtung bewegt. Von der Fördereinrichtung 150 werden die Platten P dann in ihrer Längsrichtung weitergefördert und den Separiereinrichtungen 200 zugeführt.

Figur 4 ist eine seitliche Ansicht der Plattenbereitstellungs- und -zuführeinrichtungen 100 in einer Blickrichtung von schräg rechts oben nach schräg links unten in Figur 3. In Figur 4 fördert die Fördereinrichtung 150 die ihr von links zugeführte Platte P somit weiter in einer Richtung senkrecht in die Zeichnungsebene hinein.

Wie aus den Figuren 3 und 4 erkennbar ist, können in Förderrichtung vor den Messerwalzen 120 zusätzlich Einrichtungen 130 für ein Ausrichten der Platten P vorgesehen sein. Diese Ausrichteinrichtungen 130 schieben die Platte P im Bereich vor den Messerwalzen 120 gegen einen Anschlag 132, der bündig mit den (in Figur 3 in Förderrichtung der Platte P gesehen) äußersten rechten Messern der Walzen 120 angeordnet ist. Sofern eine Platte P bezüglich ihrer Abmessungen länger ist als die Gesamtbreite der Messerwalzen 120, kann dann ein überschießender Teil der Platte P nur an dem (in Figur 3 in Förderrichtung der Platte P gesehen) äußersten linken Ende der Platte P gegenüber den äußersten linken Messern der Walzen 120 nach außen (d.h. nach links in Figur 3) vorstehen. Dieser vorstehende Plattenteil kann dann bei dem Durchlaufen der Messerwalzen 120 von den äußersten linken Messern abgeschnitten werden, so dass die Platte P im Anschluss an den Durchlauf durch die Messerwalzen 120 eine Länge hat, die genau einem ganzzahligen Vielfachen der zu bildenden Streifen S entspricht, ohne dass an einem ihrer Ränder ein Randteil verbleibt, das ggf. schmaler als ein regulärer zu bildender Streifen S ist.

Dieser Randbeschnitt muss in der Regel durchgeführt werden, damit bei der Weiterförderung der Platte P und der sich anschließenden Bildung der einzelnen Streifen S ausschließlich immer gleichgroße Streifen S erzeugt und weitergefördert werden. Anderenfalls könnte der überstehende schmalere Randabschnitt einen zu schmalen Streifen S erzeugen, was bei den sich anschließenden weiteren Prozessschritten ggf. zu Problemen führen könnte.

Die Ausrichteinrichtungen 130 können beispielsweise entweder von einer Schiebereinrichtung gebildet sein, die die Platte P an ihrem (in Figur 3 links unten befindlichen) kurzen Rand ergreift und in ihrer Längsrichtung gegen den Anschlag 132 schiebt. Alternativ können die Ausrichteinrichtungen 130 von einer Ausrichtplatte gebildet sein, auf der die Platte P zu liegen kommt und von der die Platte P reibschlüssig wiederum gegen den Anschlag 132 geschoben wird. Diese Ausrichteinrichtungen 130 können auch deshalb vorgesehen sein, weil der Plattenstapel PM sich aufgrund der maschinen-inhärenten Bewegungen oder Vibrationen typischerweise in Längsrichtung der Platten P leicht verlagert, so dass die jeweils von dem ersten Plattenschieber 112 aus dem Stapel PM heraus geschobene Platte P zunächst nicht genau mit den Messerwalzen 120 ausgerichtet ist. Die Ausrichteinrichtungen 130 sorgen damit also für eine Zentrierung der Platte P in Bezug auf die Messerwalzen 120. Sofern die Platte P von vorneherein die richtigen Abmessungen hat und der oben beschriebene Randbeschnitt damit entbehrlich ist, können die Ausrichteinrichtungen 130 auch ausschließlich für die Zentrierung der Platte P in Bezug auf die Messerwalzen 120 vorgesehen sein.

Wie Figur 4 weiter zeigt, kann im Bereich der Plattenzuführeinrichtungen 150 eine zusätzliche Schiebereinrichtung 140 vorgesehen sein, die dazu dient, die Platte P vor der Übergabe an das Fördermedium der Fördereinrichtungen 150 oberhalb des Fördermediums zunächst aufzunehmen und die Platte P dann erst durch Zurückziehen der Schiebereinrichtung 140 auf das Fördermedium der Fördereinrichtungen 150 abzusetzen. Die Schiebereinrichtung 140 kann dabei aus einer Platte oder einem Blech bestehen, auf das die Platte P von einer Schiebereinrichtung 118 wiederum in Richtung senkrecht zu ihrer Längsrichtung aufgeschoben und dort abgelegt wird, während sich das Schieberblech 140 in einer Position über dem Fördermedium der Plattenfördereinrichtungen 150 befindet. Sobald das Fördermedium der Plattenfördereinrichtungen 150 bereitsteht, wird der Absetzschieber 140 zurückgezogen (d.h. in Figur 4 nach rechts außen), wodurch die Platte P auf das Fördermedium der Plattenfördereinrichtungen 150 herab fällt. Die Fallhöhe kann hierbei beispielsweise ca. 2 bis 3 mm betragen. Mit dieser Einrichtung kann die Zuführung der Platten P zu den Plattenfördereinrichtungen 150 zeitlich von der Bewegung der Plattenfördereinrichtungen 150 entkoppelt werden, und die Platte P wird korrekt erst auf den Fördereinrichtungen 150 abgelegt, wenn diese sich in die korrekte Position bewegt haben, in der die Platte P aufgenommen werden kann.

Figur 3 zeigt die Fördereinrichtungen 150, die dazu dienen, die Platten P in ihrer Längsrichtung nacheinander zu der sich anschließenden Separiereinrichtung 200 zuzuführen. Diese Plattenzuführeinrichtungen 150 bestehen dabei insbesondere aus zwei nebeneinander angeordneten Fördereinrichtungen, insbesondere aus zwei Förderriemen bzw. zwei Förderriemenpaaren 152 und 154. Das erste Förderriemenpaar 152 dient dabei dazu, eine erste, von der Seite her zugeführte Platte P (wie oben beschrieben) aufzunehmen und dann im Wesentlichen in ihrer Längsrichtung weiterzufördern. Das zweite Förderriemenpaar 154, das dem ersten Förderriemenpaar 152 in seiner Funktion entspricht, dient dazu, eine der ersten Platte P nachfolgende zweite Platte P (die, wie oben beschrieben, wiederum von der Seite her zugeführt wird) aufzunehmen und dann wiederum im Wesentlichen in ihrer Längsrichtung weiterzufördern. Im Anschluss das zweite Förderriemenpaar 154 nimmt dann wiederum das erste Förderriemenpaar 152 eine der zuvor genannten zweiten Platte P nachfolgende nächste, wiederum von der Seite her zugeführte Platte P auf und fördert diese wiederum in ihrer Längsrichtung zu der Separiereinrichtung 200. Die Förderriemen 152, 154 weisen dabei geeignete Mitnehmer auf, die an der jeweiligen Platte P an ihrem in Förderrichtung hinteren Ende anliegen und die Platte P bei einer Bewegung des Förderriemens mitnehmen. Die Platten P liegen auf den Förderriemen 152, 154 damit so auf, dass sie ohne Friktion von den Förderriemen bewegt werden, d.h. es findet keine Relativbewegung zwischen der Platte P und dem ihr jeweils zugeordneten Förderriemen 152 bzw. 154 statt, wie es eingangs bereits erläutert wurde.

Die Förderriemen bzw. Förderriemenpaare 152, 154 sind insbesondere so gestaltet, dass sie in dem Bereich, in dem jeweils die Platte P aufliegt, eine Erhöhung bzw. eine größere Dicke haben. Wie oben im Zusammenhang mit dem Absetzschieber 140 bereits erläutert wurde (siehe Figur 4) muss sich jeder Förderriemen 152, 154 erst in die richtige Position bewegen, in der er die Platte P aufnehmen kann. Dieses ist somit die Position, in der sich der Bereich der größeren Riemendicke unter dem Absetzschieber 140 befindet, damit die Platte P bei einem Zurückziehen des Absetzschiebers 140 auf diesen erhöhten Riemenabschnitt fällt. Gleichzeitig befindet sich ein Bereich des jeweils anderen Förderriemens in diesem Bereich unter dem Absetzblech 140, der eine normale oder geringere Dicke hat. Dadurch kann die auf dem erhöhten Bereich des ersten Riemenpaars 152 aufliegende Platte P nicht in Kontakt mit dem zweiten Riemenpaar 154 in diesem Abschnitt treten. Die auf dem erhöhten Bereich des ersten Riemenpaars 152 liegende Platte P kann somit vorwärts bewegt werden, ohne dass sie das zweite Riemenpaar 154 berührt und insbesondere an diesem entlang schleift. Auf diese Weise wird eine Reibung der Platte P an den Förderriemen insgesamt und damit ein Materialabrieb von der Platte P vermieden.

Während die aufeinander folgenden Platten P somit prinzipiell auf derselben Förderbahn gefördert werden, werden sie abwechselnd von dem ersten Riemenpaar 152 und dem zweiten Riemenpaar 154 in der zuvor beschriebenen Art und Weise gefördert. Die Bewegungsgeschwindigkeit der Förderriemen wird dabei von geeigneten Steuereinrichtungen so gesteuert, dass die Platten P nach der Übernahme der Platten P im Bereich des Absetzschiebers 140 zunächst beschleunigt und anschließend wieder abgebremst werden. Auf diese Weise schließen die aufeinander folgenden Platten P, die in ihrer Längsrichtung auf den Förderriemen 152, 154 zunächst in einem Abstand zueinander liegen, aufeinander auf, d.h. jede nachfolgende Platte schließt sich vor der Separiereinrichtung 200 formschlüssig, positionsgenau und ohne Lücke an die ihr jeweils vorausgehende Platte an. Aufgrund der gesteuerten Förderung der Platten P auf den Förderriemen 152, 154 liegen die Platten P somit also ohne Staudruck lückenlos hintereinander, d.h. die jeweils in Förderrichtung von hinten zugeführten Platten P prallen nicht auf die jeweils vorhergehenden Platten P auf und schieben diese dabei nicht von hinten an.

Da, wie eingangs schon erläutert wurde, die Fördereinrichtungen 152, 154 sich nicht kontinuierlich weiterbewegen und daher insbesondere nicht unter den im Stau liegenden Platten P hindurchrutschen, sondern die Platten gesteuert, getaktet zuführen, werden die Platten P in dieser Phase besonders schonend gefördert, d.h. es gibt keine Belastungen der Platten P durch Relativgeschwindigkeiten zwischen dem jeweiligen Fördermedium (Förderriemen) und Platte P, wodurch Abrieb, Verschleiß und Beschädigung der Platten und der Maschine verhindert werden.

Bei dieser Ausführungsform mit zwei Förderriemen bzw. Förderriemenpaaren 152, 154 kann somit eine zeitliche Entkopplung der Entnahme der Platten P aus dem Magazin PM und der Ablage der Platten P auf den Fördereinrichtungen 150 bzw. 152, 154 von der Zuführung der Platten P zu der nachfolgenden Separiereinrichtung 200 realisiert werden. Während die Separiereinrichtung 200 kontinuierlich arbeitet und die Platten P von den Plattenzuführeinrichtungen 150 abzieht, arbeiten die Einrichtungen 100 zur Bereitstellung und Zuführung der Platten P zu den Fördereinrichtungen 150 (d.h. Übergabe der Platten P an die Förderriemen 152, 154) diskontinuierlich, getaktet.

Die beiden Förderriemen bzw. Förderriemenpaare 152, 154 werden dabei jeweils von einem Elektromotor, insbesondere einem hochdynamischen, präzise steuerbaren Servomotor angetrieben, wobei die Servomotoren der beiden Förderriemen 152, 154 unabhängig voneinander arbeiten und diese Förderriemen separat und unabhängig voneinander antreiben. Die Charakteristik der Servomotorantriebe ist mittels einer geeigneten Software voreingestellt. Die Förderriemen 152, 154 und insbesondere die darauf angebrachten Mitnehmer können dabei neben in den Servoantrieben integrierten Kodiereinrichtungen (Encodern) zusätzliche Kodier- und/oder Sensoreinrichtungen aufweisen, die bewirken, dass die Position der Förderriemen bzw. ihrer Mitnehmer immer genau bekannt ist, was für eine korrekte Steuerung der Servoantriebe verwendet werden kann. Wie oben schon beschrieben wurde, bewirkt diese Steuerung insbesondere, dass einer der Förderriemen 152, 154 still steht, während er die Platte P übernimmt, d.h. während die Platte P von den Messerwalzen 120 her kommend seitlich an ihn übergeben wird. Die Steuerung bewirkt dabei insbesondere des Weiteren, dass der andere der beiden Förderriemen 152, 154 während dessen die jeweils vorausgehende Platte P in Richtung zu der Separiereinrichtung 200 fördert. Die Mitnehmereinrichtungen dieses letzteren Förderriemens laufen dann weiter bzw. zurück zu der Position, in der die nächste Platte P wiederum an diesen Förderriemen übergeben wird. Gleichzeitig läuft der andere Förderriemen mit der darauf angeordneten, vorhergehenden Platte P wiederum vorwärts zu der Separiereinrichtung 200. Dabei bewirkt die Steuerung auch, dass sich der betreffende Förderriemen so bewegt, dass die betreffende Platte P lückenlos und positionsgenau, aber ohne Aufprall und ohne Staudruck an die jeweils vorhergehende Platte P anschließt. Die Fördereinrichtung 150 ist somit eine mehrzügige Fördereinrichtung, im vorliegenden Ausführungsbeispiel (Figur 3) insbesondere also eine zwei zügige Fördereinrichtung, bei der jeder Riemen bzw. jedes Riemenpaar 152, 154 jeweils einen Zug bildet, und wobei die beiden Züge koordiniert und gesteuert, aber jeweils unabhängig voneinander angetrieben werden. Es versteht sich, dass in Abhängigkeit von dem jeweiligen Anwendungsfall und der jeweiligen Ausführungsform auch eine andere Anzahl der Züge vorgesehen sein kann.

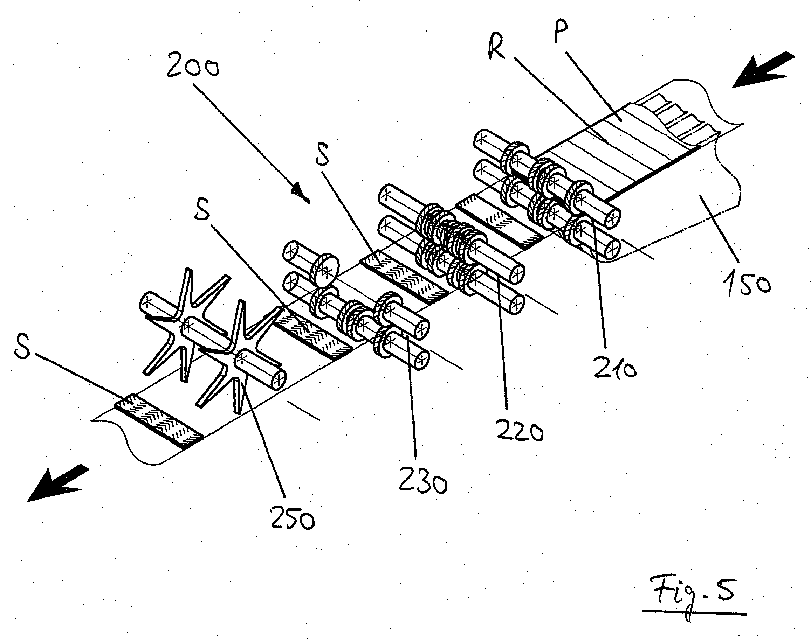

Wie insbesondere die Figuren 2 und 5 zeigen, schließen sich an die Plattenzuführeinrichtungen 150 die Separiereinrichtungen 200 zum Bilden der einzelnen streifenförmigen Gegenstände S aus den Platten P an. Die Separiereinrichtungen 200 umfassen dabei insbesondere Einrichtungen zum Abtrennen jeweils eines einzelnen streifenförmigen Gegenstands (Streifen S) von der Platte P an ihrem in Förderrichtung vorderen Ende durch Abreißen entlang der jeweils vordersten, in der Platte P erzeugten Rille R derart, dass sich die zugeführte Platte P und der abgetrennte Streifen S im Wesentlichen in der gleichen Ebene befinden. Die Separiereinrichtungen 200 umfassen darüber hinaus Einrichtungen zum Beschleunigen des abgetrennten Streifens S in Förderrichtung zur Bildung eines definierten Abstands zwischen den einzelnen aufeinander folgenden Streifen S.

Wie Figur 2 zeigt, umfassen die Separiereinrichtungen 200 insbesondere drei parallel zueinander angeordnete Walzenpaare 210, 220, 230, die in Förderrichtung hintereinander angeordnet sind und die in geeigneter Weise ineinander eingreifen. Jedes der Walzenpaare ergreift die zugeführte Platte P bzw. die daraus gebildeten Produktstreifen S und fördert diese weiter, indem jedes Walzenpaar das Produkt zwischen seinen beiden, sich gegenläufig drehenden Walzen aufnimmt. Wie aus Figur 5 erkennbar ist, weisen die Walzen jedes Walzenpaars 210, 220, 230 Umfangsoberflächenbereiche auf, von denen das Produkt ergriffen wird. Die Walzenoberflächen sind in diesen Bereichen typischerweise mit einer Struktur versehen, mittels der das durchlaufende Produkt ergriffen werden kann, wobei sich diese Struktur, je nach Materialbeschaffenheit des geförderten Produkts, mehr oder weniger tief in das Produktmaterial eingraben kann. Kaugummimaterialien sind typischerweise so weich, dass die strukturierten Walzenoberflächen eine entsprechende Struktur oder Musterung auf der Oberfläche des durchlaufenden Produkts hinterlassen. Diese Struktur auf den Kaugummistreifen S ist in Figur 5 jeweils im Anschluss an die Walzenpaare 210, 220, 230 erkennbar. Um diese Gegebenheiten deutlich zu machen, zeigt Figur 5 eine gesprengte Ansicht der Separiereinrichtungen 200 und insbesondere der Anordnung der Walzenpaare 210, 220, 230. Demgegenüber zeigt Figur 2 die normale Anordnung dieser Komponenten innerhalb der Maschine.

Der Abstand zwischen den Achsen der aufeinander folgenden Walzenpaare in Förderrichtung gesehen ist im Wesentlichen gleich der Breite des zu bildenden Kaugummistreifens S in Förderrichtung. Insbesondere muss der Abstand zwischen den Achsen der Walzenpaare in Förderrichtung so bemessen sein, dass der von einem ersten Walzenpaar geförderte und freigegebene Streifen S von dem nachfolgenden nächsten Walzenpaar ergriffen und wiederum weitergefördert werden kann.

Die Rotationsgeschwindigkeit der Walzenpaare 210, 220, 230 nimmt in Förderrichtung zu. Wie Figur 5 zeigt, wird die von den Plattenfördereinrichtungen 150 zugeführte Platte P von dem ersten Walzenpaar 210 ergriffen. Hierbei kann vorgesehen sein, dass die Rotationsgeschwindigkeit der Walzen des ersten Walzenpaars 210 im Wesentlichen der Geschwindigkeit der Zuführung der Platte P entspricht, so dass die Platte P durch das erste Walzenpaar 210 von den Zuführeinrichtungen 150 mit konstanter Geschwindigkeit übernommen und abgezogen wird. Das nachfolgende, zweite Walzenpaar 220 dreht sich gegenüber dem ersten Walzenpaar 210 mit einer größeren Geschwindigkeit. Dieses bewirkt, dass die Walzen des zweiten Walzenpaars 220 an dem vorderen Ende der Platte P entlang der jeweils vordersten Rille R einen Streifen S abtrennen, insbesondere abreißen, da die Fördergeschwindigkeit durch das zweite Walzenpaar 220 erhöht wird, d.h. die Produktförderbewegung beschleunigt wird.

Das dritte Walzenpaar 230 hat gegenüber dem vorhergehenden zweiten Walzenpaar 220 wiederum eine höhere Rotationsgeschwindigkeit, womit der durch das dritte Walzenpaar 230 laufende Streifen S in Förderrichtung weiter beschleunigt wird. Auf diese Weise wird der Abstand zwischen den einzelnen Streifen S in Förderrichtung bei dem Durchlauf durch die Walzenpaare 210, 220, 230 sukzessive vergrößert.

In einer alternativen Ausführungsform kann bereits das erste Walzenpaar 210 eine Rotationsgeschwindigkeit, d. h. Fördergeschwindigkeit, haben, die größer ist als die Geschwindigkeit der Zuführung der Platte P über die Plattenfördereinrichtungen 150 zu dem ersten Walzenpaar 210. In diesem Fall wird der Produktstreifen S bereits durch das erste Walzenpaar 210 entlang der vordersten Rille R von der Platte P abgetrennt.

Gemäß der vorliegenden Erfindung ist es wesentlich, dass die von der Platte P abgetrennten Kaugummistreifen S in Förderrichtung abgerissen werden, ohne dass die gebildeten Streifen S dabei in eine andere Förderebene umgelenkt werden. Die zugeführte Platte P und der von ihr abgetrennte Streifen S liegen also im Wesentlichen in der gleichen Ebene. Wie eingangs erläutert wurde, wurden die Streifen S bei Maschinen aus dem Stand der Technik mittels einer Brecherwalze oder dergleichen von der Platte P abgebrochen und dabei aus der Ebene der Zuführung der Platte P abgelenkt. Bei entsprechender Drehrichtung der Brecherwalze wurden die Streifen S in den bekannten Maschinen insbesondere nach unten in eine tiefer liegende Ebene weggedrückt, in der die Streifen dann weitergefördert wurden. Die erfindungsgemäße Vermeidung einer Ab- oder Umlenkung der gebildeten Streifen S sorgt somit für eine schonende Behandlung des Produkts in diesem Bereich, wobei insbesondere Abrieb und Beschädigungen an dem Produkt vermieden werden. Die erfindungsgemäße Ausführung gewährleistet außerdem eine höhere Prozesssicherheit, indem Produktstaus und Verstopfungen der Maschine in diesem Bereich verhindert werden.

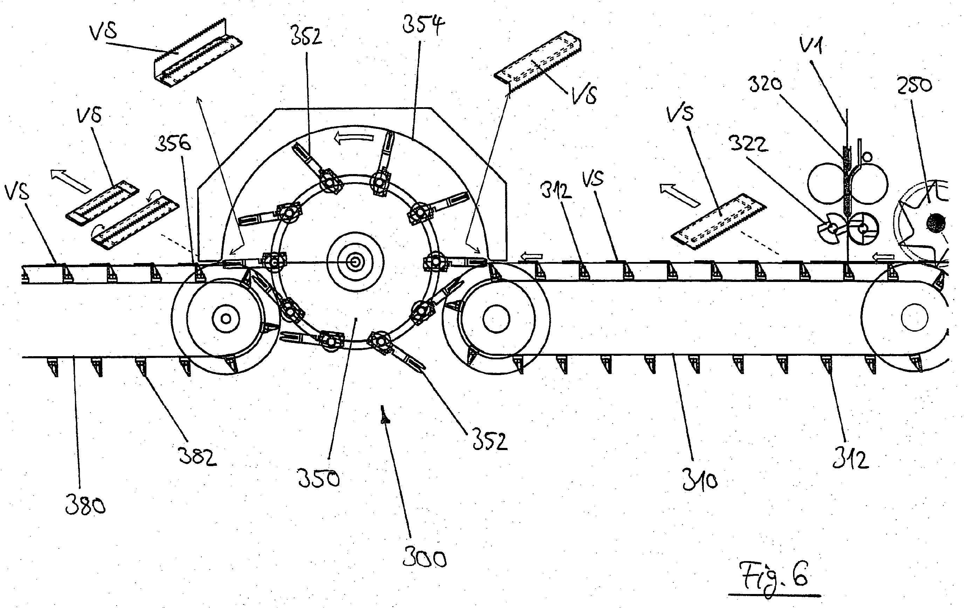

Wie den Figuren 2 und 5 weiter zu entnehmen ist, ist in den Separiereinrichtungen 200 eine sternförmige Fördereinrichtung 250 in Förderrichtung hinter den mehreren Walzenpaaren 210, 220, 230 angeordnet. Diese sternförmige Fördereinrichtung 250 dreht sich dabei um eine Achse, die parallel zu den Achsen der vorhergehenden Walzenpaare angeordnet ist, wobei die Rotationsgeschwindigkeit des Fördersterns 250 aber gegenüber der Rotationsgeschwindigkeit der vorhergehenden Walzen nochmals erhöht ist. Auf diese Weise beschleunigt der Förderstern 250 den Streifen S nochmals in Förderrichtung weiter, wodurch der Abstand zwischen den aufeinander folgenden Streifen S hier nochmals vergrößert wird. Insbesondere wird hierbei ein Abstand zwischen den aufeinander folgenden Streifen S gebildet, der der Teilung, d.h. dem Abstand der einzelnen aufeinander folgenden Mitnehmer der nachfolgenden Fördereinrichtungen entspricht, mit denen der Streifen S zu der nächsten Station weitergefördert wird. Diese Situation ist in Figur 6 am rechten Bildrand dargestellt.

Wie hier erkennbar ist, übergibt der Separier- oder Förderstern 250 die einzelnen gebildeten Kaugummistreifen S an eine erste Streifenfördereinrichtung 310, die Mitnehmer 312 für jeweils einen Streifen S in einem festen, vorgegebenen Abstand aufweist. Der Separierstern 250 übergibt die Streifen S somit mit einer Geschwindigkeit und mit einem Abstand voneinander an die erste Streifenfördereinrichtung 310, die der Geschwindigkeit und dem Abstand der einzelnen Mitnehmer 312 der Streifenfördereinrichtung 310 entspricht. Die erste Streifenfördereinrichtung 310 kann durch geeignete Fördermittel gebildet sein, beispielsweise Riemen- oder Kettenfördereinrichtungen mit daran angebrachten Mitnehmern 312, die den Produktstreifen S ergreifen und weiter vorschieben.

Die Streifenfördereinrichtung 310 transportiert die Kaugummistreifen S dann zu einer ersten Verpackungsmaterialzuführeinrichtung 320. Hier werden die Streifen S in einen bereitstehenden Vorhang aus einem ersten Verpackungsmaterial V1 geschoben. Beim Weiterfördern der Streifen S durch die Mitnehmer 312 legt sich das Verpackungsmaterial V1 dann um den Streifen S, wobei an der Verpackungsmaterialzuführeinrichtung 320 vorgesehene Schneideinrichtungen 322 das Verpackungsmaterial nach einer bestimmten Vorschublänge bzw. Abzugslänge abschneiden. Dadurch wird für jeden Streifen S ein Verpackungsmaterialabschnitt erzeugt, der sich beim Weiterfördern des Streifens S lose um diesen herum legt. Im Anschluss an die erste Verpackungsmaterialzuführeinrichtung 320 ist der Streifen S somit teilweise in den Abschnitt des Verpackungsmaterials eingewickelt, wie es in Figur 6 oberhalb der Förderbahn schematisch vergrößert dargestellt ist (teilverpackter Streifen VS).

Damit dieser zunächst teilweise in Packmaterial eingewickelte Streifen VS vollständig in das Packmaterial eingewickelt wird, sind in der Folge der Weiterförderung Falteinrichtungen 350 für das Packmaterial vorgesehen. So wird der teilverpackte Streifen VS von der ersten Streifenfördereinrichtung 310 in eine Schlitztrommel oder Falttrommel 350 übergeben. Diese Schlitztrommel 350 weist in geeigneter Weise vor- und/oder nachlaufende, schlitzförmige Aufnehmer 352 auf. Der teilverpackte Streifen VS wird horizontal in einen Aufnehmer 352 eingeschoben und durch eine Rotation der Falttrommel 350 und einen entsprechenden Umlauf des jeweiligen Aufnehmers 352 um 180° gewendet. Der Aufnehmer 352 läuft dabei radial außen an einer als Faltfläche wirkenden Innenwand 354 der Schlitztrommel 350 entlang. Dadurch wird der am Anfang zunächst aus dem Aufnehmer 352 horizontal vorstehende Verpackungsmaterialabschnitt des Produktstreifens VS um 90° gefaltet, wie es in Figur 6 rechts oberhalb der Schlitztrommel 350 dargestellt ist (Vorfaltung).

Wenn der Aufnehmer 352 aufgrund der Drehung der Trommel 350 die um 180° gedrehte, gegenüberliegende Position erreicht hat (vgl. die Darstellung des teilverpackten Streifens VS links oberhalb der Trommel 350), wird der Streifen VS aus dem Aufnehmer 352 heraus geschoben. Dabei wird er wiederum an einer Faltfläche der Falttrommel 350 derart vorbeigeführt, dass der zunächst immer noch um 90° von dem teilverpackten Streifen VS abstehende Verpackungsmaterialabschnitt um weitere 90° auf den Streifen VS heruntergefaltet wird (wie es in Figur 6 links neben der Falttrommel 350 dargestellt ist - Fertigfaltung). Um dieses zu erreichen, wird der teilverpackte Streifen VS in der um 180° gewendeten Position des Aufnehmers 352 der Schlitztrommel 350 mittels einer zweiten Streifenfördereinrichtung 380 aus dem jeweiligen Aufnehmer 352 entnommen und dann weitergefördert. Die Streifenfördereinrichtung 380 weist dafür wiederum geeignete Mitnehmer 382 auf, die derart in den Aufnehmer 352 eingreifen, dass sie den teilverpackten Streifen VS aus dem Aufnehmer 352 heraus schieben und im Anschluss an die Falttrommel 350 weiterfördern. Im Anschluss an die Falttrommel 350 sind im Bereich der zweiten Streifenfördereinrichtung 380 sodann noch geeignete Falteinrichtungen (Faltweichen) 356 vorgesehen, die einen seitlichen Überschlag der seitlich abstehenden Verpackungsmaterialabschnitte an dem Streifen VS realisieren (Seitenfaltung). In Abhängigkeit von der Faltungsart können sich diese Faltweichen auch in der ersten Streifenfördereinrichtung 310 befinden. Diese seitlich überstehenden Verpackungsmaterialabschnitte werden somit um 180° auf den Streifen VS gefaltet, so dass am Ende ein vollständig verpackter Streifen VS vorliegt, wie er am ganz linken Ende der Förderbahn der Figur 6 schematisch dargestellt ist.

Wie oben erwähnt wurde, ist der einzelne Kaugummistreifen S somit in einen Abschnitt des Verpackungsmaterials V1 vollständig eingewickelt, der in der Verpackungsmaterialzuführeinrichtung 320 bereitgestellt wird. Diese Einrichtung umfasst in typischen Ausführungsformen eine servogetriebene Abrollung des Verpackungsmaterialstreifens mit Bahnkantensteuerung für eine seitliche Korrektur des Verpackungsmaterials. Die Verpackungsmäterialzuführ- bzw. -abzugseinrichtung 320 kann des Weiteren einen kurvengesteuerten Packmaterialabzug (Servoantrieb mit Kurvenprofil) und eine positionssynchrone Zustellung des Packmaterials umfassen. Schließlich umfasst die Verpackungsmaterialzuführeinrichtung 320 auch eine kurvengesteuerte Schneidstation 322 (Servoantrieb mit Kurvenprofil) für eine positiönssynchrone Zustellung von einzelnen Packmaterialabschnitten für jeden Streifen S. Die Schneidstation 322 kann dabei von einer oder zwei rotierenden Messerwalzen und ggf. einem feststehenden Gegenmesser gebildet sein, wobei verschiedene Packmaterialführungen und -zuschnitte realisiert werden können. Die Packmaterialabzugseinrichtung bzw. Verpackungsmaterialzuführeinrichtung 320 und die Schneidstation 322 können nach oben verfahrbar ausgebildet und zu öffnen sein, um notwendige Wartungen vornehmen und eventuelle Störungen beseitigen zu können.

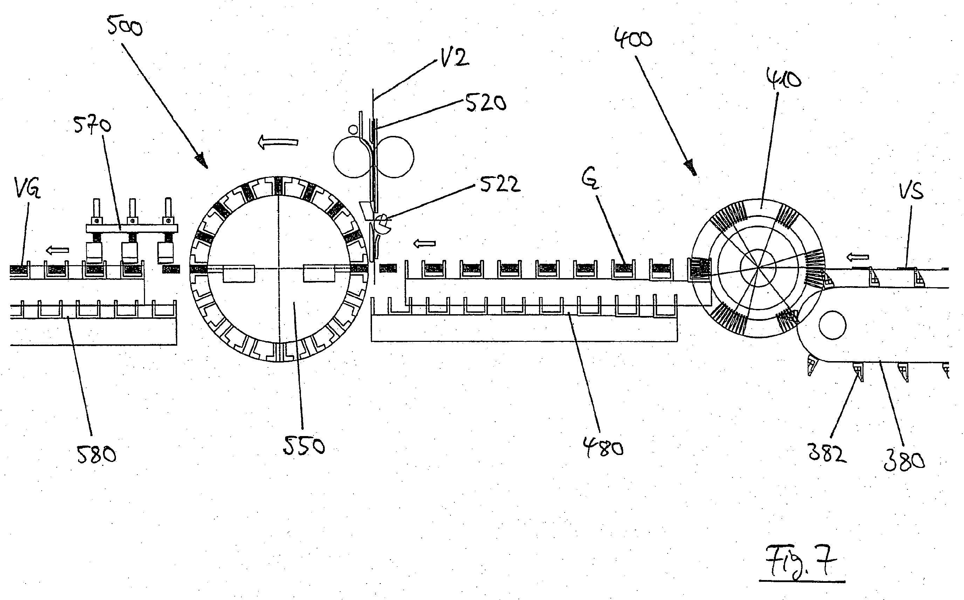

In der weiteren Prozessabfolge der Verpackungsmaschine (vgl. Figuren 1 und 7) folgen dann die Einrichtungen 400 zum Bilden von Gruppen G der einzelnen verpackten streifenförmigen Gegenstände VS. In der in den Zeichnungen dargestellten Ausführungsform sind diese Gruppenbildungseinrichtungen 400 Einrichtungen zum Bilden eines Stapels mehrerer übereinander liegender Pröduktstreifen VS. In einer anderen Ausführungsform, die in den Zeichnungen nicht dargestellt ist, können die Gruppenbildungseinrichtungen alternativ so ausgebildet sein, dass mehrere Produktstreifen nebeneinander liegen. In noch einer weiteren Ausführungsform können die Gruppenbildungseinrichtungen auch so vorgesehen sein, dass mehrere Stapel von übereinander liegenden Einzelstreifen nebeneinander angeordnet werden. Diese verschiedenen Ausführungsformen der Gruppenbildungseinrichtungen können variabel und modular mit den vorhergehenden, oben beschriebenen Maschinenbestandteilen und -komponenten kombiniert und ausgeführt werden, wodurch unterschiedlichste Gruppengrößen, Gruppenformen und Verpackungsstile für jeweils gewünschte, unterschiedliche Verkaufseinheiten realisiert werden können.

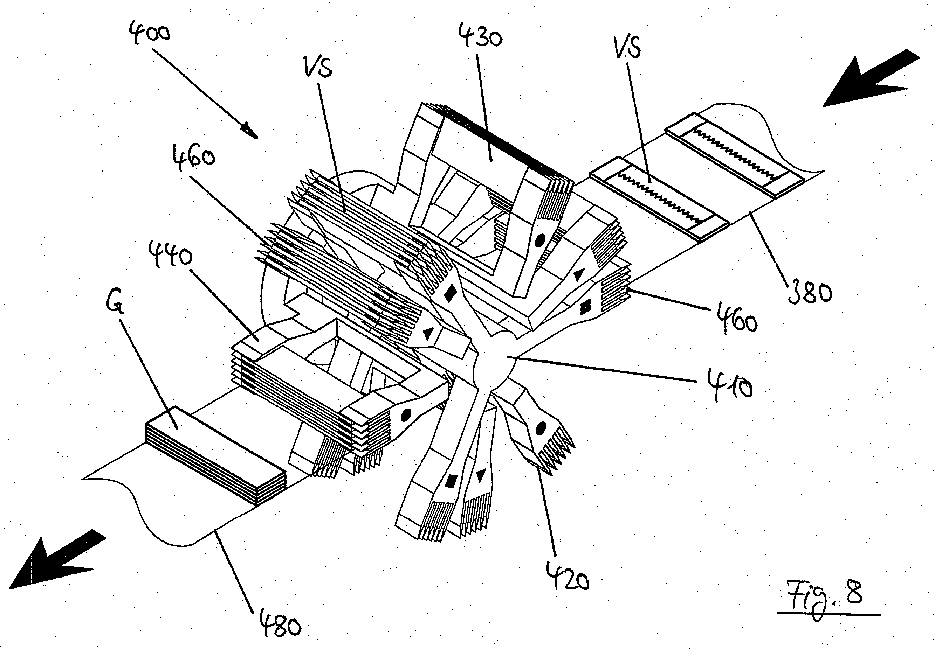

Wie die Figuren 7 und 8 zeigen, umfassen die Gruppenbildungseinrichtungen 400 der vorliegenden Ausführungsform eine Sammeltrommel 410, die mehrere so genannte Züge aufweist. In Fachkreisen wird eine derartige Sammeltrommel auch als "mehrzügiger Racetrack" bezeichnet. In der in Figur 8 dargestellten Ausführungsform hat die Sammeltrommel 410 drei Züge, die alle um eine gemeinsame Achse drehbar angeordnet sind ("dreizügiger Racetrack"). Dabei ist jeder Zug relativ zu den weiteren Zügen der Sammeltrommel beweglich. Jeder der Züge weist mehrere Aufnahmeeinrichtungen oder Sammeltaschen 420, 430, 440 auf, wobei jede Sammeltasche wiederum mehrere Fächer 460 zur Aufnahme jeweils eines Produktstreifens VS aufweist. Die Anzahl der Fächer 460 jeder Sammeltasche 420, 430, 440 entspricht dabei der Anzahl der Streifen VS, aus denen ein Stapel bzw. eine Gruppe G von Streifen gebildet werden soll.

In der Ausführungsform der Figur 8 weist die Sammeltrommel 410 drei Züge auf, die jeweils wiederum drei Sammeltaschen 420, 430, 440 haben, wobei jede Sammeltasche fünf Fächer 460 zur Aufnahme jeweils eines Streifens VS hat. In Figur 8 sind die drei Züge mit den Symbolen Kreis, Dreieck und Quadrat gekennzeichnet, d.h. alle Sammeltaschen 420, 430, 440, die vorliegend das gleiche Symbol aufweisen, gehören zu einem Zug. Die Sammeltaschen eines Zugs sind dabei typischerweise äquidistant, d.h. unter einem Winkel von 120° zueinander angeordnet. Die Züge drehen sich intermittierend gesteuert um die Achse der Trommel 410, wobei sie sich phasenweise langsam oder schnell bewegen oder zum Stillstand kommen. Jeder der Züge kann sich dabei immer nur so weit weiterdrehen, dass keine seiner Sammeltaschen 420, 430, 440 mit den in Drehrichtung jeweils vorhergehenden Sammeltaschen eines anderen Zugs kollidiert. Die drei Züge bewegen sich somit einerseits zwar unabhängig voneinander um die Drehachse, wobei sie im vorgenannten Sinne in ihrer Drehbewegung gesteuert aber doch voneinander abhängig sind. Jeder Zug hat dabei einen eigenen Antrieb in der Form eines Elektromotors (Servomotor).

In Figur 8 werden die einzelnen verpackten Streifen VS von der zweiten Streifenfördereinrichtung 380 zu der Sammeltrommel 410 hin gefördert, wo sie einzeln nacheinander in die Fächer 460 einer bereitstehenden Sammeltasche 420, 430, 440 eines der drei Züge eingeschoben werden. Der betreffende Zug dreht sich dabei intermittierend jeweils um eine Position derart weiter, dass das jeweils nächste Fach der Sammeltasche gefüllt werden kann. Sobald alle Fächer dieser Sammeltasche gefüllt sind, dreht sich diese Sammeltasche weiter in die um 180° gegenüberliegende Abgabeposition der Sammeltrommel 410, wo alle Fächer 460 dieser Sammeltasche gleichzeitig entleert werden, indem der Inhalt dieser Sammeltasche gleichzeitig heraus geschoben wird. Dieses erfolgt beispielsweise durch einen Rechenförderer 480 (siehe Figur 7), der den Stapel der Streifen VS in der zu entleerenden Sammeltasche von unten und hinten ergreift und in Förderrichtung aus der betreffenden Sammeltasche heraus schiebt (in Figur 8 nach schräg links unten). Hier liegt dann somit ein Stapel bzw. eine Gruppe G von fünf einzelnen verpackten Kaugummistreifen VS vor.

Da die einzelnen verpackten Kaugummistreifen VS von der Streifenfördereinrichtung 380 kontinuierlich unter gleichen Abständen angeliefert werden, muss gewährleistet sein, dass diese Streifen kontinuierlich von der Sammeltrommel 410 abgenommen und weitergefördert werden. Während eine Sammeltasche 420, 430, 440 eines bestimmten Zugs somit sukzessive mit den Streifen VS befüllt wird (fünf Fächer 460 zur Aufnahme von fünf Streifen VS), schließt die Sammeltasche eines nächsten Zugs auf die vorhergehende Sammeltasche auf und steht bereit, um ohne Unterbrechung der Streifenanlieferung in ihren Fächern sukzessive die nächsten fünf angelieferten Streifen VS aufzunehmen, sobald alle Fächer der vorhergehenden Sammeltasche des vorhergehenden Zugs befüllt sind und sich diese vorhergehende Sammeltasche aus diesem Befüllungsbereich herausbewegt hat (vgl. auch Figur 7, rechte Seite). Während somit nun die nächste Sammeltasche sukzessive mit Streifen VS befüllt wird, bewegen sich die anderen Sammeltaschen gesteuert unter der Maßgabe weiter, dass sie nicht mit der jeweils vorhergehenden Sammeltasche eines jeweils vorhergehenden Zugs kollidieren. Dabei bewegen sich die mit Kaugummistreifen VS vollständig befüllten Sammeltaschen, wie zuvor beschrieben, um 180° in die Abgabeposition, in der die Gruppe G aus der jeweiligen Sammeltasche entnommen wird. Während dessen bewegen sich die an der Abgabeposition bereits zuvor entleerten Sammeltaschen sukzessive weiter und laufen wieder in die Ausgangsposition zur Aufnahme neuer angelieferter Streifen VS.

Auf diese Weise ist der Vorgang des Befüllens der Sammeltrommel 410 mit einzelnen Streifen VS zeitlich von dem Vorgang der Entnahme der gebildeten Gruppen G aus der Sammeltrommel 410 entkoppelt. Dieses Prinzip der zeitlichen Entkopplung der Bewegungen entspricht dem oben beschriebenen, im Bereich der Bereitstellung und Zuführung der Platten P zu den Plattenfördereinrichtungen 150 und den Separiereinrichtungen 200 angewendeten Prinzip, wobei die Abfolge der Verfahrensschritte aber gewissermaßen umgekehrt erfolgt. Während die Platte P am Maschineneingang als zusammenhängendes, einheitliches Gebilde bereitgestellt und zugeführt wird und dann in den Separiereinrichtungen 200 in einzelne Streifen S getrennt wird, werden im Bereich der Gruppenbildungseinrichtungen 400 die einzelnen Streifen VS angeliefert und zu einer Gruppe G zusammengefasst und als solche weitergefördert.

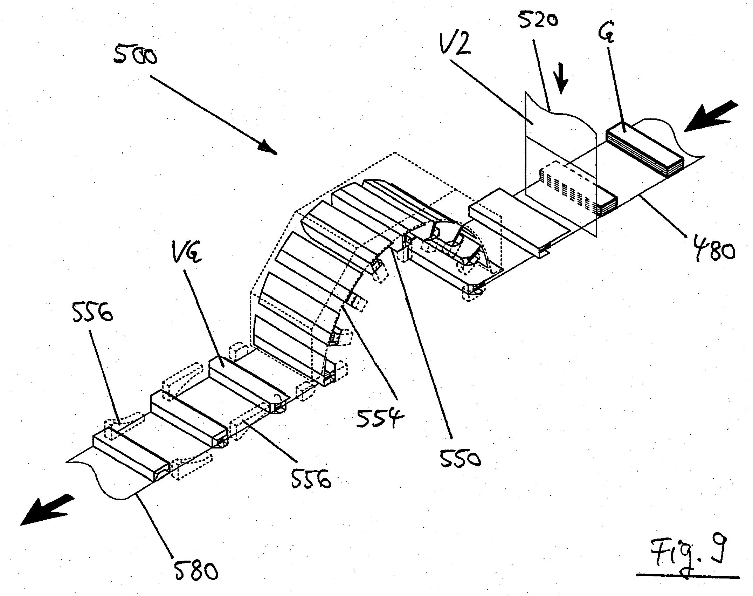

An die Gruppenbildungseinrichtungen 400 schließen sich in Förderrichtung in der Verpackungsmaschine schließlich noch die Gruppenverpackungseinrichtungen 500 an, die wiederum im Wesentlichen von einer Verpackungsmaterialzuführeinrichtung 520 und Falteinrichtungen in Form einer Falttrommel 550 mit Faltflächen 554 und zugehörigen Faltweichen 556 gebildet sind. Wie die Figuren 7 und 9 zeigen, werden die gebildeten Gruppen G der einzelnen verpackten Kaugummistreifen VS von der Rechenfördereinrichtung 480 zu den Gruppenverpackungseinrichtungen 500 zugeführt. Die Rechenfördereinrichtung 480 ist dabei insbesondere ein Doppelrechenförderer, was den Vorteil hat, dass die Bewegungsgeschwindigkeit jedes einzelnen Rechens reduziert werden kann, was aus Gründen der Antriebsmechanik und -steuerung vorteilhaft ist.

Die angelieferte Streifengruppe G durchläuft (vergleichbar zu der oben beschriebenen Verpackungsmaterialzuführeinrichtung 320 für die Einzelstreifen S; siehe Figur 6) zunächst eine Verpackungsmaterialzuführeinrichtung 520, in der ein zweites Verpackungsmaterial V2 zugeführt wird, in dem die Gruppe G schließlich verpackt werden soll. Die Verpackungsmaterialzuführeinrichtung 520 umfasst dabei wiederum auch Schneideinrichtungen 522, mittels denen ein Verpackungsmaterialabschnitt erzeugt und in die Förderbahn zugestellt wird. Die Verpackungsmaterialzuführeinrichtung 520 umfasst außerdem (ebenfalls wiederum wie die oben beschriebene Verpackungsmaterialzuführeinrichtung 320 der Einzelstreifen) Packmaterialabrolleinrichtungen und Packmaterialabzugseinrichtungen, die im Wesentlichen die gleichen mechanisch-physikalischen Merkmale aufweisen können, wie es oben in Verbindung mit der ersten Verpackungsmaterialzuführeinrichtung 320 beschrieben wurde. Im Bereich der Verpackungsmaterialzführeinrichtung 520 für die Streifengruppe G kann außerdem auch noch eine Bereitstellung, Zuführung und Abwicklung eines Aufreißfadens für die Verpackung vorgesehen sein.

Wie Figur 9 zeigt, legt sich der Verpackungsmaterialzuschnitt im Bereich der Verpackungsmaterialzuführeinrichtung 520 um die zugeführte Gruppe G, die dann der Falttrommel 550 zugeführt wird. In dieser Falttrommel 550 wird die zugeführte, teilverpackte Gruppe G um 180° gewendet, wobei der überstehende Verpackungsmaterialabschnitt mittels der Faltfläche 554 der Falttrommel 550 umgefaltet wird und bei einem Ausschieben der teilverpackten Gruppe G aus der Falttrommel 550 vollständig an das so gebildete Päckchen angelegt wird. An die Falttrommel 550 schließen sich dann noch geeignete weitere Falteinrichtungen, insbesondere Faltweichen 556 an, die schließlich noch die seitlich überstehenden Verpackungsmaterialabschnitte umfalten und an das gebildete Päckchen anlegen, wie es in Figur 9 am unteren linken Ende der Förderstrecke erkennbar ist. In diesem Bereich kann sich auch eine Siegeleinrichtung 570 befinden, die das Verpackungsmaterial des gebildeten Päckchens VG verschließt (vgl. Figur 7). Das gebildete Kaugummistreifenpäckchen VG wird dann schließlich von einer geeigneten Fördereinrichtung, beispielsweise einer Rechenfördereinrichtung 580 (vorzugsweise wiederum ein Doppelrechen) weitergefördert und aus der Verpackungsmaschine ausgegeben.

### Bezugszeichenliste

- P: Platte
- PM: Plattenstapel, Magazin
- R: Rille
- S: streifenförmiger Gegenstand, Streifen
- V1: erstes Verpackungsmaterial
- VS: verpackter Streifen
- G: Gruppe, Stapel verpackter Streifen
- V2: zweites Verpackungsmaterial
- VG: verpackte Streifengruppe

- 100: Plattenbereitstellungs- und -zuführeinrichtungen
- 112: Schiebereinrichtungen, Plattenschieber
- 114: Schiebereinrichtungen, Plattenschieber
- 116: Schiebereinrichtungen, Plattenschieber
- 118: Schiebereinrichtungen, Plattenschieber
- 120: Messerwalzen, Walzenpaar
- 130: Ausrichteinrichtungen
- 132: Anschlag
- 140: Schiebereinrichtung, Absetzplatte
- 150: Plattenzuführeinrichtungen, Fördereinrichtungen
- 152: erste Plattenfördereinrichtung, Förderriemen/-paar
- 154: zweite Plattenfördereinrichtung, Förderriemen/-paar

- 200: Separiereinrichtungen
- 210: Erstes Walzenpaar
- 220: Zweites Walzenpaar
- 230: Drittes Walzenpaar
- 250: Sternförmige Fördereinrichtung, Separierstern

- 300: Streifenverpackungseinrichtungen
- 310: Erste Streifenfördereinrichtung
- 312: Mitnehmer
- 320: Verpackungsmaterialzuführeinrichtung
- 322: Schneideinrichtungen, Schneidstation
- 350: Falteinrichtungen, Falttrommel, Schlitztrommel
- 352: Aufnehmer
- 354: Faltfläche, Trommelinnenwand
- 356: Falteinrichtungen, Faltweichen
- 380: Zweite Streifenfördereinrichtung
- 382: Mitnehmer

- 400: Gruppenbildungseinrichtungen
- 410: Sammeltrommel
- 420: erste Sammeltasche eines Zugs
- 430: zweite Sammeltasche eines Zugs
- 440: dritte Sammeltasche eines Zugs
- 460: Fächer in Sammeltasche
- 480: Rechenfördereinrichtung, Doppelrechen

- 500: Gruppenverpackungseinrichtungen
- 520: Verpackungsmaterialzuführeinrichtung
- 522: Schneideinrichtungen, Schneidstation
- 550: Falteinrichtungen, Falttrommel
- 554: Faltfläche
- 556: Falteinrichtungen, Faltweichen
- 570: Siegeleinrichtung
- 580: Rechenfördereinrichtung, Doppelrechen

## Patentansprüche

1. Verfahren zum Verpacken streifenförmiger Gegenstände, insbesondere zum Verzehr geeigneter Gegenstände, insbesondere Kaugummistreifen, mit folgenden Schritten:
- Bereitstellen von im wesentlichen rechteckigen Platten (P), aus denen die streifenförmigen Gegenstände (S) zu bilden sind, wobei die Länge der kürzeren Seiten der Platten (P) der Länge eines zu bildenden streifenförmigen Gegenstands (S) entspricht;
- Bilden einzelner streifenförmiger Gegenstände (S) aus den bereitgestellten Platten (P);
- Verpacken der gebildeten einzelnen streifenförmigen Gegenstände (S) mit einem ersten Verpackungsmaterial (V1);
- Bilden einer Gruppe (G) der einzelnen verpackten streifenförmigen Gegenstände (VS);
- Verpacken der gebildeten Gruppe (G) der streifenförmigen Gegenstände (VS) mit einem zweiten Verpackungsmaterial (V2);
- wobei der Schritt des Bereitstellens der Platten (P) folgende weitere Schritte umfasst:
- Erzeugen von im wesentlichen parallel zu den kürzeren Seiten der Platten (P) verlaufenden Rillen (R) in den Platten (P) ;
- gesteuertes Zuführen der einzelnen Platten (P) in ihrer Längsrichtung nacheinander zu dem nachfolgenden Schritt des Bildens der einzelnen streifenförmigen Gegenstände (S) derart, dass jede Platte (P) positionsgenau, lückenlos und ohne Staudruck an die jeweils vorhergehende Platte (P) anschließt;
**dadurch gekennzeichnet,**
- **dass** der Schritt des Bildens der einzelnen streifenförmigen Gegenstände (S) folgende weitere Schritte umfasst:
- Trennen jeweils eines einzelnen streifenförmigen Gegenstands (S) von der Platte (P) an ihrem in Förderrichtung vorderen Ende durch Abreißen entlang der jeweils vordersten erzeugten Rille (R) derart, dass sich die zugeführte Platte (P) und der abgetrennte streifenförmige Gegenstand (S) im wesentlichen in der gleichen Ebene befinden; und
- Beschleunigen des abgetrennten streifenförmigen Gegenstands (S) in Förderrichtung zur Bildung eines Abstands zwischen den einzelnen aufeinander folgenden streifenförmigen Gegenständen (S);
- wobei die aufeinander folgenden Platten (P) in ihrer Längsrichtung und die daraus gebildeten einzelnen streifenförmigen Gegenstände (S) mehrere aufeinander folgende Fördereinrichtungen (210, 220, 230, 250) durchlaufen, die die Platten (P) oder die gebildeten streifenförmigen Gegenstände (S) ergreifen und weiterfördern, wobei die Fördergeschwindigkeit der aufeinander folgenden Fördereinrichtungen (210, 220, 230, 250) in Förderrichtung zunimmt;
- wobei die aufeinander folgenden Fördereinrichtungen (210, 220, 230, 250) mehrere, insbesondere drei, parallel zueinander und in Förderrichtung hintereinander angeordnete Walzenpaare (210, 220, 230) umfassen, wobei die Rotationsgeschwindigkeit der aufeinander folgenden Walzenpaare (210, 220, 230) in Förderrichtung zunimmt, wobei die aufeinander folgenden Walzenpaare (210, 220, 230) jeweils ineinander eingreifen, wobei der Abstand in Förderrichtung zwischen den Achsen der aufeinander folgenden Walzenpaare (210, 220, 230) im wesentlichen gleich der Breite des zu bildenden einzelnen streifenförmigen Gegenstands (S) in Förderrichtung ist, und wobei das erste Walzenpaar (210) die zugeführte Platte (P) ergreift und die nachfolgenden Walzenpaare (220, 230) den streifenförmigen Gegenstand (S) von der Platte (P) abtrennen; und
- wobei die aufeinander folgenden Fördereinrichtungen (210, 220, 230, 250) eine in Förderrichtung hinter den mehreren Walzenpaaren (210, 220, 230) angeordnete sternförmige Fördereinrichtung (250) umfassen, die um eine Achse rotiert, die parallel zu den Achsen der Walzenpaare (210, 220, 230) angeordnet ist, wobei die Rotationsgeschwindigkeit der sternförmigen Fördereinrichtung (250) größer ist als die Rotationsgeschwindigkeit der vorhergehenden Walzenpaare (210, 220, 230), und wobei die sternförmige Fördereinrichtung (250) den abgetrennten streifenförmigen Gegenstand (S) in Förderrichtung beschleunigt.

2. Verfahren nach Anspruch 1, **dadurch gekennzeichnet, dass** eine bereitgestellte Platte (P) an eine erste Fördereinrichtung (152) übergeben wird, von der die Platte (P) in ihrer Längsrichtung zuerst beschleunigt und anschließend wieder abgebremst wird, so dass sich die Platte (P) an die vorhergehende Platte (P) anschließt, und dass die nächste bereitgestellte Platte (P) an eine zweite, der ersten Fördereinrichtung (152) entsprechende Fördereinrichtung (154) übergeben wird, von der diese Platte (P) in ihrer Längsrichtung zuerst beschleunigt und anschließend wieder abgebremst wird, so dass sich die Platte (P) an die vorhergehende Platte (P) anschließt, wobei die Platten (P) im wesentlichen ohne Friktion von den Fördereinrichtungen (152, 154) gefördert werden.

3. Verfahren nach Anspruch 1 oder 2, **dadurch gekennzeichnet, dass** die Platten (P) vor dem Erzeugen der Rillen (R) derart ausgerichtet werden, dass die Platten (P) nur an einem ihrer Enden in Längsrichtung einen überstehenden Teil aufweisen können, der bei dem Erzeugen der Rillen (R) abgeschnitten wird.

4. Verfahren nach einem der vorhergehenden Ansprüche, **dadurch gekennzeichnet, dass** der Schritt des Bildens einer Gruppe (G) der einzelnen verpackten streifenförmigen Gegenstände (VS) das Bilden eines Stapels mehrerer übereinander liegender streifenförmiger Gegenstände (VS) umfasst.

5. Verfahren nach einem der vorhergehenden Ansprüche, **dadurch gekennzeichnet, dass** der Schritt des Bildens einer Gruppe (G) der einzelnen verpackten streifenförmigen Gegenstände (VS) die Anordnung mehrerer streifenförmiger Gegenstände (VS) nebeneinander liegend umfasst.

6. Vorrichtung zum Herstellen einzelner streifenförmiger Gegenstände, insbesondere zum Verzehr geeigneter Gegenstände, insbesondere Kaugummistreifen, mit folgenden Merkmalen:
- Einrichtungen (100) zum Bereitstellen von im wesentlichen rechteckigen Platten (P), aus denen die streifenförmigen Gegenstände (S) zu bilden sind, wobei die Länge der kürzeren Seiten der Platten (P) der Länge eines zu bildenden streifenförmigen Gegenstands (S) entspricht;
- Einrichtungen (200) zum Bilden einzelner streifenförmiger Gegenstände (S) aus den bereitgestellten Platten (P);
**dadurch gekennzeichnet,**
- **dass** die Einrichtungen (100) zum Bereitstellen der Platten (P) folgende Merkmale aufweisen:
- Einrichtungen (120) zum Erzeugen von im wesentlichen parallel zu den kürzeren Seiten der Platten (P) verlaufenden Rillen (R) in den Platten (P);
- Einrichtungen (150, 152, 154) für ein gesteuertes Zuführen der einzelnen Platten (P) in ihrer Längsrichtung nacheinander zu den nachfolgenden Einrichtungen (200) zum Bilden der einzelnen streifenförmigen Gegenstände (S) derart, dass jede Platte (P) positionsgenau, lückenlos und ohne Staudruck an die jeweils vorhergehende Platte (P) anschließt;
- und **dass** die Einrichtungen (200) zum Bilden der einzelnen streifenförmigen Gegenstände (S) mehrere aufeinander folgende Fördereinrichtungen (210, 220, 230, 250) aufweisen, deren Fördergeschwindigkeit in Förderrichtung zunimmt, wobei die Fördereinrichtungen (210, 220, 230, 250) die zugeführten, lückenlos aufeinander folgenden Platten (P) in ihrer Längsrichtung und die daraus gebildeten einzelnen streifenförmigen Gegenstände (S) ergreifen und weiterfördern, und wobei die Fördereinrichtungen (210, 220, 230, 250) folgende Merkmale aufweisen:
- Einrichtungen (210, 220, 230) zum Trennen jeweils eines einzelnen streifenförmigen Gegenstands (S) von der Platte (P) an ihrem in Förderrichtung vorderen Ende durch Abreißen entlang der jeweils vordersten erzeugten Rille (R) derart, dass sich die zugeführte Platte (P) und der abgetrennte streifenförmige Gegenstand (S) im wesentlichen in der gleichen Ebene befinden, wobei mehrere, insbesondere drei, parallel zueinander angeordnete Walzenpaare (210, 220, 230) in Förderrichtung hintereinander angeordnet sind, wobei die Rotationsgeschwindigkeit der aufeinander folgenden Walzenpaare (210, 220, 230) in Förderrichtung zunimmt, wobei die aufeinander folgenden Walzenpaare (210, 220, 230) jeweils ineinander eingreifen, wobei der Abstand in Förderrichtung zwischen den Achsen der aufeinander folgenden Walzenpaare (210, 220, 230) im wesentlichen gleich der Breite des zu bildenden einzelnen streifenförmigen Gegenstands (S) in Förderrichtung ist, und wobei das erste Walzenpaar (210) die zugeführte Platte (P) ergreift und die nachfolgenden Walzenpaare (220, 230) den streifenförmigen Gegenstand (S) von der Platte (P) abtrennen; und
- Einrichtungen (250) zum Beschleunigen des abgetrennten streifenförmigen Gegenstands (S) in Förderrichtung zur Bildung eines definierten Abstands zwischen den einzelnen aufeinander folgenden streifenförmigen Gegenständen (S), wobei eine sternförmige Fördereinrichtung (250) in Förderrichtung hinter den mehreren Walzenpaaren (210, 220, 230) angeordnet ist, wobei die sternförmige Fördereinrichtung (250) um eine Achse rotiert, die parallel zu den Achsen der Walzenpaare (210, 220, 230) angeordnet ist, wobei die Rotationsgeschwindigkeit der sternförmigen Fördereinrichtung (250) größer ist als die Rotationsgeschwindigkeit der vorhergehenden Walzenpaare (210, 220, 230), und wobei die sternförmige Fördereinrichtung (250) den abgetrennten streifenförmigen Gegenstand (S) in Förderrichtung beschleunigt.

7. Vorrichtung nach Anspruch 6, **dadurch gekennzeichnet, dass** die Rotationsgeschwindigkeit des ersten Walzenpaars (210) im wesentlichen der Geschwindigkeit der Zuführung der Platte (P) entspricht.

8. Vorrichtung nach einem der Ansprüche 6 oder 7, **dadurch gekennzeichnet, dass** die Einrichtungen (100) zum Bereitstellen der Platten (P) folgende weitere Merkmale aufweisen:
- ein Magazin zum Bereitstellen der Platten (P) als Stapel (PM);
- Messerwalzen (120) zum Erzeugen der Rillen (R) in den Platten (P) ;
- Schiebereinrichtungen zum Entnehmen (112) jeweils einer Platte (P) aus dem Magazin, zum Zuführen (114) der Platte (P) zu den Messerwalzen (120), und zum Weiterfördern (116, 118) der Platte (P) im Anschluss an die Messerwalzen (120), wobei die Schiebereinrichtungen (112, 114, 116, 118) die Platte (P) im wesentlichen in einer Richtung senkrecht zu ihrer Längsrichtung bewegen.

9. Vorrichtung nach einem der Ansprüche 6 bis 8, **dadurch gekennzeichnet, dass** die Einrichtungen (100) zum Bereitstellen der Platten (P) folgende weitere Merkmale aufweisen:
- eine erste Fördereinrichtung (152) zum Fördern einer ersten bereitgestellten Platte (P) im wesentlichen in ihrer Längsrichtung;
- eine zweite Fördereinrichtung (154) zum Fördern einer der ersten Platte (P) nachfolgenden zweiten bereitgestellten Platte (P) im wesentlichen in ihrer Längsrichtung;
- wobei die erste Fördereinrichtung (152) im Anschluss an die zweite Fördereinrichtung (154) eine der zweiten Platte (P) nachfolgende nächste bereitgestellte Platte (P) fördert;
- wobei die erste und die zweite Fördereinrichtung (152, 154) derart angeordnet sind, dass die Platten (P) auf derselben Förderbahn derart gefördert werden, dass jede Platte (P) formschlüssig an die ihr vorausgehende Platte (P) anschließt;
- Steuereinrichtungen zum Steuern der ersten und zweiten Fördereinrichtungen (152, 154) derart, dass die geförderten Platten (P) jeweils zuerst beschleunigt und anschließend wieder abgebremst werden.

10. Vorrichtung nach Anspruch 9, **dadurch gekennzeichnet, dass** die erste und die zweite Fördereinrichtung jeweils mindestens einen Förderriemen (152, 154) aufweisen, wobei die erste Platte (P) auf dem Förderriemen (152) der ersten Fördereinrichtung und die zweite Platte (P) auf dem Förderriemen (154) der zweiten Fördereinrichtung jeweils im wesentlichen ohne Friktion aufliegen, und wobei jeder Förderriemen (152, 154) mindestens einen Mitnehmer aufweist, an dem die Platte (P) anliegt.

11. Vorrichtung nach Anspruch 10, **dadurch gekennzeichnet, dass** der Förderriemen (152, 154) jeder Fördereinrichtung in dem Bereich, in dem die Platte (P) aufliegt, eine Erhöhung derart hat, dass die aufliegende Platte (P) nicht den daneben angeordneten Förderriemen (152, 154) der jeweils anderen Fördereinrichtung berührt.

12. Vorrichtung nach einem der Ansprüche 8 bis 11, **gekennzeichnet durch** Schiebereinrichtungen (118) zum Übergeben der bereitgestellten Platten (P) im Anschluss an die Messerwalzen (120) an die erste oder zweite Fördereinrichtung (152, 154), wobei die Schiebereinrichtungen (118) die Platten (P) im wesentlichen in einer Richtung senkrecht zu ihrer Längsrichtung bewegen.

13. Vorrichtung nach einem der Ansprüche 8 bis 12, **gekennzeichnet durch** in Förderrichtung vor den Messerwalzen (120) angeordnete Einrichtungen (130) zum Ausrichten der Platten (P) derart, dass die Platten (P) nur an einem ihrer Enden in Längsrichtung einen überstehenden Teil aufweisen können, der bei dem Erzeugen der Rillen (R) abgeschnitten wird.

14. Vorrichtung zum Verpacken streifenförmiger Gegenstände, insbesondere zum Verzehr geeigneter Gegenstände, insbesondere Kaugummistreifen, **gekennzeichnet durch** folgende Merkmale:
- eine Vorrichtung zum Herstellen einzelner streifenförmiger Gegenstände (S) nach einem der Ansprüche 6 bis 13;
- Einrichtungen (300) zum Verpacken der hergestellten einzelnen streifenförmigen Gegenstände (S) mit einem ersten Verpackungsmaterial (V1);
- Einrichtungen (400) zum Bilden einer Gruppe (G) der einzelnen verpackten streifenförmigen Gegenstände (VS);
- Einrichtungen (500) zum Verpacken der gebildeten Gruppe (G) der streifenförmigen Gegenstände (VS) mit einem zweiten Verpackungsmaterial (V2).

15. Vorrichtung nach Anspruch 14, **dadurch gekennzeichnet, dass** die Einrichtungen (400) zum Bilden einer Gruppe (G) der einzelnen verpackten streifenförmigen Gegenstände (VS) Einrichtungen (410) zum Bilden eines Stapels (G) mehrerer übereinander liegender streifenförmiger Gegenstände (VS) aufweisen.

16. Vorrichtung nach Anspruch 15, **dadurch gekennzeichnet, dass** die Einrichtungen (400) zum Bilden eines Stapels (G) der streifenförmigen Gegenstände (VS) eine Sammeltrommel (410) mit mehreren Zügen (mehrzügiger Racetrack) aufweisen, wobei sich alle Züge der Sammeltrommel (410) um eine gemeinsame Achse drehen, wobei jeder Zug relativ zu den weiteren Zügen der Sammeltrommel (410) beweglich ist, wobei jeder Zug mehrere Sammeltaschen (420, 430, 440) aufweist, wobei jede Sammeltasche (420, 430, 440) mehrere Fächer (460) zur Aufnahme jeweils eines streifenförmigen Gegenstands (VS) aufweist, und wobei die Anzahl der Fächer (460) der Anzahl der streifenförmigen Gegenstände (VS) in einem zu bildenden Stapel (G) entspricht.

17. Vorrichtung nach Anspruch 16, **dadurch gekennzeichnet, dass** die Sammeltrommel (410) drei Züge mit jeweils drei Sammeltaschen (420, 430, 440) mit jeweils fünf Fächern (460) aufweist.

18. Vorrichtung nach Anspruch 14, **dadurch gekennzeichnet, dass** die Einrichtungen (400) zum Bilden einer Gruppe (G) der einzelnen verpackten streifenförmigen Gegenstände (VS) Einrichtungen zum Anordnen mehrerer streifenförmiger Gegenstände (VS) nebeneinander liegend aufweisen.

19. Vorrichtung nach einem der Ansprüche 14 bis 18, **dadurch gekennzeichnet, dass** die Einrichtungen (300) zum Verpacken der hergestellten einzelnen streifenförmigen Gegenstände (S) mit einem ersten Verpackungsmaterial (V1) und die Einrichtungen (500) zum Verpacken der gebildeten Gruppe (G) der streifenförmigen Gegenstände (VS) mit einem zweiten Verpackungsmaterial (V2) jeweils Einrichtungen (320, 322; 520, 522) für die Zufuhr eines Verpackungsmaterialabschnitts und Einrichtungen (350; 550, 556) für ein Falten überstehender Teile des Verpackungsmaterialabschnitts um die zu verpackenden einzelnen streifenförmigen Gegenstände (VS) oder Gruppen (VG) der streifenförmigen Gegenstände (VS) herum aufweisen.

## Claims

1. A method for packing strip-like objects, in particular objects suitable for consumption, in particular chewing gum strips, having the following steps:
- providing substantially rectangular slabs (P), from which the strip-like objects (S) are intended to be formed, wherein the length of the shorter sides of the slabs (P) corresponds to the length of a strip-like object (S) to be formed;
- forming individual strip-like objects (S) from the slabs (P) provided;
- packing the formed, individual strip-like objects (S) with a first packing material (V1);
- forming a group (G) of the individual, packed strip-like objects (VS);
- packing the formed group (G) of strip-like objects (VS) with a second packing material (V2);
- the step of providing the slabs (P) comprising the following further steps:
- producing in the slabs (P) grooves (R) which extend substantially parallel with the shorter sides of the slabs (P);
- controlled supply of the individual slabs (P) in their longitudinal direction successively to the following step of forming the individual strip-like objects (S) in such a manner that each slab (P) adjoins the preceding slab (P) in a positionally precise and gapless manner, without back-up pressure;
**characterized in that**
- the step of forming the individual strip-like objects (S) comprises the following further steps:
- separating an individual strip-like object (S) from the slab (P) at the front end thereof in the conveying direction by tearing along the foremost groove (R) produced in such a manner that the supplied slab (P) and the separated strip-like object (S) are substantially in the same plane;
- accelerating the separated strip-like object (S) in the conveying direction in order to form a spacing between the individual, successive strip-like objects (S);
- wherein the successive slabs (P) in their longitudinal direction and the individual strip-like objects (S) formed therefrom pass through a plurality of successive conveying devices (210, 220, 230, 250) which grip and further convey the slabs (P) or the strip-like objects (S) formed, wherein the conveying speed of the successive conveying devices (210, 220, 230, 250) increases in the conveying direction;
- wherein the successive conveying devices (210, 220, 230, 250) comprise a plurality of, in particular three, roller pairs (210, 220, 230) arranged parallel with each other and arranged one behind the other in the conveying direction, wherein the rotation speed of the successive roller pairs (210, 220, 230) increases in the conveying direction, wherein the successive roller pairs (210, 220, 230) respectively engage with each other, wherein the spacing in the conveying direction between the axes of the successive roller pairs (210, 220, 230) is substantially identical to the width of the individual strip-like object (S) to be formed in the conveying direction, and wherein the first roller pair (210) grips the supplied slab (P) and the subsequent roller pairs (220, 230) separate the strip-like object (S) from the slab (P); and
- wherein the successive conveying devices (210, 220, 230, 250) comprise a star-like conveying device (250) which is arranged in the conveying direction downstream of the plurality of roller pairs (210, 220, 230), wherein the star-like conveying device (250) rotates about an axis which is arranged parallel with the axes of the roller pairs (210, 220, 230), wherein the rotation speed of the star-like conveying device (250) is larger than the rotation speed of the preceding roller pairs (210, 220, 230), and wherein the star-like conveying device (250) accelerates the separated strip-like object (S) in the conveying direction.

2. The method as claimed in claim 1, **characterized in that** a provided slab (P) is transferred to a first conveying device (152) by which the slab (P) is first accelerated and subsequently braked again in the longitudinal direction thereof so that the slab (P) adjoins the preceding slab (P), and **in that** the next slab (P) provided is transferred to a second conveying device (154) which corresponds to the first conveying device (152) and by which that slab (P) is first accelerated and subsequently braked again in the longitudinal direction thereof so that the slab (P) adjoins the preceding slab (P), wherein the slabs (P) are conveyed by the conveying devices (152, 154) substantially without friction.

3. The method as claimed in claim 1 or claim 2, **characterized in that** the slabs (P) are orientated before the grooves (R) are produced in such a manner that the slabs (P) can have, only at one of the ends thereof in a longitudinal direction, a projecting portion which is cut off when the grooves (R) are produced.

4. The method as claimed in one of the preceding claims, **characterized in that** the step of forming a group (G) of individual packed strip-like objects (VS) comprises the formation of a stack of a plurality of strip-like objects (VS) one above the other.

5. The method as claimed in one of the preceding claims, **characterized in that** the step of forming a group (G) of individual packed strip-like objects (VS) comprises the arrangement of a plurality of strip-like objects (VS) beside each other.

6. An apparatus for producing individual strip-like objects, in particular objects suitable for consumption, in particular chewing gum strips, having the following features:
- devices (100) for providing substantially rectangular slabs (P), from which the strip-like objects (S) are intended to be formed, wherein the length of the shorter sides of the slabs (P) corresponds to the length of a strip-like object (S) to be formed;
- devices (200) for forming individual strip-like objects (S) from the slabs (P) provided;
**characterized in that**
- the devices (100) for providing the slabs (P) have the following features:
- devices (120) for producing in the slabs (P) grooves (R) which extend substantially parallel with the shorter sides of the slabs (P);
- devices (150, 152, 154) for controlled supply of the individual slabs (P) in their longitudinal direction successively to the following devices (200) for forming the individual strip-like objects (S) in such a manner that each slab (P) adjoins the preceding slab (P) in a positionally precise and gapless manner, without back-up pressure;
- and **in that** the devices (200) for forming the individual strip-like objects (S) comprise a plurality of successive conveying devices (210, 220, 230, 250), wherein the conveying speed of the successive conveying devices (210, 220, 230, 250) increases in the conveying direction, wherein the conveying devices (210, 220, 230, 250) grip and further convey the supplied slabs (P), which are mutually successive in a gapless manner, in the longitudinal direction thereof and the individual strip-like objects (S) formed therefrom, and wherein the conveying devices (210, 220, 230, 250) have the following features:
- devices (210, 220, 230) for separating an individual strip-like object (S) from the slab (P) at the front end thereof in the conveying direction by tearing along the foremost groove (R) produced in such a manner that the supplied slab (P) and the separated strip-like object (S) are substantially in the same plane, wherein a plurality of, in particular three, roller pairs (210, 220, 230) arranged parallel with each other are arranged one behind the other in the conveying direction, wherein the rotation speed of the successive roller pairs (210, 220, 230) increases in the conveying direction, wherein the successive roller pairs (210, 220, 230) respectively engage with each other, wherein the spacing in the conveying direction between the axes of the successive roller pairs (210, 220, 230) is substantially identical to the width of the individual strip-like object (S) to be formed in the conveying direction, and wherein the first roller pair (210) grips the supplied slab (P) and the subsequent roller pairs (220, 230) separate the strip-like object (S) from the slab (P); and
- devices (250) for accelerating the separated strip-like object (S) in the conveying direction in order to form a defined spacing between the individual, successive strip-like objects (S), wherein a star-like conveying device (250) is arranged in the conveying direction downstream of the plurality of roller pairs (210, 220, 230), wherein the star-like conveying device (250) rotates about an axis which is arranged parallel with the axes of the roller pairs (210, 220, 230), wherein the rotation speed of the star-like conveying device (250) is larger than the rotation speed of the preceding roller pairs (210, 220, 230), and wherein the star-like conveying device (250) accelerates the separated strip-like object (S) in the conveying direction.

7. The apparatus as claimed in claim 6, **characterized in that** the rotation speed of the first roller pair (210) substantially corresponds to the speed of the supply of the slab (P).

8. The apparatus as claimed in one of claims 6 or 7, **characterized in that** the devices (100) for providing the slabs (P) have the following further features:
- a magazine for providing the slabs (P) as a stack (PM);
- cutter rollers (120) for producing the grooves (R) in the slabs (P);
- pushing devices for removing (112) respectively a slab (P) from the magazine, for supplying (114) the slab (P) to the cutter rollers (120) and for further conveying (116, 118) the slab (P) downstream of the cutter rollers (120), wherein the pushing devices (112, 114, 116, 118) move the slab (P) substantially in a direction perpendicular to the longitudinal direction thereof.

9. The apparatus as claimed in one of claims 6 to 8, **characterized in that** the devices (100) for providing the slabs (P) have the following further features:
- a first conveying device (152) for conveying a first provided slab (P) substantially in the longitudinal direction thereof;
- a second conveying device (154) for conveying a second provided slab (P) which follows the first slab (P) substantially in the longitudinal direction thereof;
- wherein the first conveying device (152) downstream of the second conveying device (154) conveys a next provided slab (P) which follows the second slab (P);
- wherein the first and the second conveying devices (152, 154) are arranged in such a manner that the slabs (P) are conveyed on the same conveying path in such a manner that each slab (P) adjoins the slab (P) preceding it in a positive-locking manner;
- control devices for controlling the first and second conveying devices (152, 154) in such a manner that the conveyed slabs (P) respectively are first accelerated and subsequently braked again.

10. The apparatus as claimed in claim 9, **characterized in that** the first and second conveying devices respectively have at least one conveyor belt (152, 154), wherein the first slab (P) is supported on the conveyor belt (152) of the first conveying device and the second slab (P) is supported on the conveyor belt (154) of the second conveying device substantially without any friction, and wherein each conveyor belt (152, 154) has at least one carrier which the slab (P) abuts.

11. The apparatus as claimed in claim 10, **characterized in that** the conveyor belt (152, 154) of each conveying device has a protrusion in the region in which the slab (P) is supported in such a manner that the supported slab (P) does not touch the adjacent conveyor belt (152, 154) of the other conveying device, respectively.

12. The apparatus as claimed in one of claims 8 to 11, **characterized by** pushing devices (118) for transferring the provided slabs (P) downstream of the cutter rollers (120) to the first or second conveying device (152, 154), wherein the pushing devices (118) move the slabs (P) substantially in a direction perpendicular to the longitudinal direction thereof.

13. The apparatus as claimed in one of claims 8 to 12, **characterized by** devices (130) arranged upstream of the cutter rollers (120) in the conveying direction for orientating the slabs (P) in such a manner that the slabs (P) can have, only at one of the ends thereof in the longitudinal direction, a projecting portion which is cut off when the grooves (R) are produced.

14. An apparatus for packing strip-like objects, in particular objects suitable for consumption, in particular chewing gum strips, **characterized by** the following features:
- a device for producing individual strip-like objects (S) as claimed in one of claims 6 to 13;
- devices (300) for packing the produced individual strip-like objects (S) with a first packing material (V1);
- devices (400) for forming a group (G) of the individual packed strip-like objects (VS);
- devices (500) for packing the formed group (G) of the strip-like objects (VS) with a second packing material (V2).

15. The apparatus as claimed in claim 14, **characterized in that** the devices (400) for forming a group (G) of the individual packed strip-like objects (VS) have devices (410) for forming a stack (G) of a plurality of strip-like objects (VS) which are one above the other.

16. The apparatus as claimed in claim 15, **characterized in that** the devices (400) for forming a stack (G) of the strip-like objects (VS) have a collecting drum (410) having a plurality of channels (multiple-channel racetrack), wherein all the channels of the collecting drum (410) rotate about a common axis, wherein each channel is movable relative to the additional channels of the collecting drum (410), wherein each channel has a plurality of collecting pockets (420, 430, 440), wherein each collecting pocket (420, 430, 440) has a plurality of compartments (460) for receiving a strip-like object (VS), and wherein the number of compartments (460) corresponds to the number of strip-like objects (VS) in a stack (G) to be formed.

17. The apparatus as claimed in claim 16, **characterized in that** the collecting drum (410) has three channels having three collecting pockets (420, 430, 440) having five compartments (460), respectively.

18. The apparatus as claimed in claim 14, **characterized in that** the devices (400) for forming a group (G) of the individual packed strip-like objects (VS) have devices for arranging a plurality of strip-like objects (VS) beside each other.

19. The apparatus as claimed in one of claims 14 to 18, **characterized in that** the devices (300) for packing the produced, individual strip-like objects (S) with a first packing material (V1) and the devices (500) for packing the formed group (G) of the strip-like objects (VS) with a second packing material (V2) respectively have devices (320, 322; 520, 522) for supplying a packing material portion and devices (350; 550, 556) for folding projecting portions of the packing material portion around the individual strip-like objects (VS) or groups (VG) of the strip-like objects (VS) which are intended to be packed.

## Revendications

1. Procédé d'emballage d'objets en forme de bandes, en particulier d'objets appropriés pour la consommation, en particulier des tablettes de chewing-gum, avec les étapes suivantes :
- fourniture de plaques (P) essentiellement rectangulaires à partir desquelles doivent être formés les objets en forme de bandes (S), la longueur des petits côtés des plaques (P) correspondant à la longueur d'un objet en forme de bandes (S) à former ;
- formation d'objets en forme de bandes (S) individuels à partir des plaques (P) fournies ;
- emballage des objets en forme de bandes (S) individuels formés, avec un premier matériau d'emballage (V1) ;
- formation d'un groupe (G) d'objets en forme de bandes (VS) emballés individuels ;
- emballage du groupe (G) formé d'objets en forme de bandes (VS), avec un deuxième matériau d'emballage (V2) ;
- l'étape de fourniture des plaques (P) comprenant les autres étapes suivantes :
- production, dans les plaques (P), de cannelures (R) essentiellement parallèles aux petits côtés des plaques (P) ;
- amenée commandée des plaques (P) individuelles les unes après les autres, dans leur direction longitudinale, à l'étape suivante de formation des objets en forme de bandes (S) individuels de telle sorte que chaque plaque (P) se joint, avec un positionnement précis, sans interruption et sans pression d'accumulation, à la plaque (P) respectivement précédente ;
**caractérisé en ce que**
- l'étape de formation des objets en forme de bandes (S) individuels comprend les autres étapes suivantes :
- séparation opérée respectivement entre un objet en forme de bandes (S) individuel et la plaque (P) à son extrémité avant dans la direction du transport par déchirement le long de la cannelure (R) respectivement la plus en avant de telle sorte que la plaque (P) amenée et l'objet en forme de bandes (S) séparé sont situés essentiellement dans le même plan ; et
- accélération de l'objet en forme de bandes (S) séparé dans la direction de transport pour la formation d'un intervalle entre les objets en forme de bandes (S) individuels qui se suivent ;
- les plaques (P) qui se suivent, dans leur direction longitudinale, et les objets en forme de bandes (S) individuels formés à partir d'elles parcourant plusieurs systèmes de transport (210, 220, 230, 250) qui se suivent et qui saisissent et transportent plus loin les plaques (P) ou les objets en forme de bandes (S) formés, la vitesse de transport des systèmes de transport (210, 220, 230, 250) qui se suivent augmentant dans la direction du transport ;
- les systèmes de transport (210, 220, 230, 250) qui se suivent comprenant plusieurs, en particulier trois, paires de rouleaux (210, 220, 230) disposées parallèlement entre elles et les unes derrière les autres dans la direction du transport, la vitesse de rotation des paires de rouleaux (210, 220, 230) qui se suivent augmentant dans la direction du transport, les paires de rouleaux (210, 220, 230) qui se suivent engrenant respectivement les unes avec les autres, l'intervalle, dans la direction du transport, entre les axes des paires de rouleaux (210, 220, 230) qui se suivent étant essentiellement identique à la largeur de l'objet en forme de bandes (S) individuel à former dans la direction du transport, et la première paire de rouleaux (210) saisissant la plaque (P) amenée, et les paires de rouleaux (220, 230) suivantes opérant la séparation entre l'objet en forme de bandes (S) et la plaque (P) ; et
- les systèmes de transport (210, 220, 230, 250) qui se suivent comprenant un système de transport (250) en forme d'étoile, disposé derrière les plusieurs paires de rouleaux (210, 220, 230) dans la direction du transport, qui tourne autour d'un axe qui est disposé parallèlement aux axes des paires de rouleaux (210, 220, 230), la vitesse de rotation du système de transport (250) en forme d'étoile étant supérieure à la vitesse de rotation des paires de rouleaux (210, 220, 230) qui précèdent, et le système de transport (250) en forme d'étoile accélérant l'objet en forme de bandes (S) séparé dans la direction du transport.

2. Procédé selon la revendication 1, **caractérisé en ce qu'**une plaque (P) fournie est transférée à un premier système de transport (152) par lequel la plaque (P) est d'abord accélérée dans sa direction longitudinale et puis est de nouveau freinée de telle sorte que la plaque (P) se joint à la plaque (P) précédente, et **en ce que** la plaque (P) fournie suivante est transférée à un deuxième système de transport (154) correspondant au premier système de transport (152) et par lequel cette plaque (P) est d'abord accélérée dans sa direction longitudinale et puis est de nouveau freinée de telle sorte que la plaque (P) se joint à la plaque (P) précédente, les plaques (P) étant transportées essentiellement sans friction par les systèmes de transport (152, 154).

3. Procédé selon la revendication 1 ou 2, **caractérisé en ce que** les plaques (P) sont, avant la production des cannelures (R), orientées de telle sorte que les plaques (P) ne peuvent présenter une partie saillante qu'à une de leurs extrémités dans la direction longitudinale, partie saillante qui est découpée lors de la production des cannelures (R).

4. Procédé selon l'une des revendications précédentes, **caractérisé en ce que** l'étape de formation d'un groupe (G) d'objets en forme de bandes (VS) emballés individuels comprend la formation d'une pile de plusieurs objets en forme de bandes (VS) situés les uns sur les autres.

5. Procédé selon l'une des revendications précédentes, **caractérisé en ce que** l'étape de formation d'un groupe (G) d'objets en forme de bandes (VS) emballés individuels comprend l'agencement de plusieurs objets en forme de bandes (VS) juxtaposés.

6. Dispositif de fabrication d'objets en forme de bandes individuels, en particulier d'objets appropriés pour la consommation, en particulier de tablettes de chewing-gum, avec les caractéristiques suivantes :
- systèmes (100) pour la fourniture de plaques (P) essentiellement rectangulaires, à partir desquelles doivent être formés les objets en forme de bandes (S), la longueur des petits côtés des plaques (P) correspondant à la longueur d'un objet en forme de bandes (S) à former ;
- systèmes (200) pour la formation d'objets en forme de bandes (S) individuels à partir des plaques (P) fournies ;
**caractérisé en ce que**
- les systèmes (100) pour la fourniture des plaques (P) présentent les caractéristiques suivantes :
- systèmes (120) pour la production, dans les plaques (P), de cannelures (R) essentiellement parallèles aux petits côtés des plaques (P) ;
- systèmes (150, 152, 154) pour une amenée commandée des plaques (P) individuelles les unes après les autres, dans leur direction longitudinale, aux systèmes (200) suivants pour la formation des objets en forme de bandes (S) individuels de telle sorte que chaque plaque (P) se joint, avec un positionnement précis, sans interruption et sans pression d'accumulation, à la plaque (P) respectivement précédente ;
- et **en ce que** les systèmes (200) pour la formation des objets en forme de bandes (S) individuels présentent plusieurs systèmes de transport (210, 220, 230, 250) qui se suivent dont la vitesse de transport augmente dans la direction du transport, les systèmes de transport (210, 220, 230, 250) saisissant et transportant plus loin les plaques (P) amenées qui se suivent sans interruption dans leur direction longitudinale et les objets en forme de bandes (S) individuels formés à partir de cela, et les systèmes de transport (210, 220, 230, 250) présentant les caractéristiques suivantes :
- systèmes (210, 220, 230) pour opérer une séparation respectivement entre un objet en forme de bandes (S) individuel et la plaque (P) à son extrémité avant dans la direction du transport par déchirement le long de la cannelure (R) produite respectivement la plus en avant de telle sorte que la plaque (P) amenée et l'objet en forme de bandes (S) séparé sont situés essentiellement dans le même plan, plusieurs, en particulier trois, paires de rouleaux (210, 220, 230) étant disposées parallèlement entre elles et les unes derrière les autres dans la direction du transport, la vitesse de rotation des paires de rouleaux (210, 220, 230) qui se suivent augmentant dans la direction du transport, les paires de rouleaux (210, 220, 230) qui se suivent engrenant respectivement les unes avec les autres, l'intervalle, dans la direction du transport, entre les axes des paires de rouleaux (210, 220, 230) qui se suivent étant essentiellement identique à la largeur de l'objet en forme de bandes (S) individuel à former dans la direction du transport, et la première paire de rouleaux (210) saisissant la plaque (P) amenée, et les paires de rouleaux (220, 230) suivantes opérant la séparation entre l'objet en forme de bandes (S) et la plaque (P) ; et
- systèmes (250) pour accélérer l'objet en forme de bandes (S) séparé dans la direction du transport pour la formation d'un intervalle défini entre les objets en forme de bandes (S) individuels qui se suivent, un système de transport (250) en forme d'étoile étant disposé derrière les plusieurs paires de rouleaux (210, 220, 230), le système de transport (250) en forme d'étoile tournant autour d'un axe qui est disposé parallèlement aux axes des paires de rouleaux (210, 220, 230), la vitesse de rotation du système de transport (250) en forme d'étoile étant supérieure à la vitesse de rotation des paires de rouleaux (210, 220, 230) précédentes, et le système de transport (250) en forme d'étoile accélérant l'objet en forme de bandes (S) séparé dans la direction du transport.

7. Dispositif selon la revendication 6, **caractérisé en ce que** la vitesse de rotation de la première paire de rouleaux (210) correspond essentiellement à la vitesse d'amenée de la plaque (P).

8. Dispositif selon l'une des revendications 6 ou 7, **caractérisé en ce que** les systèmes (100) pour la fourniture des plaques (P) présentent les autres caractéristiques suivantes :
- un magasin pour la fourniture des plaques (P) en tant que pile (PM) ;
- rouleaux porte-lame (120) pour la production des cannelures (R) dans les plaques (P) ;
- systèmes pousseurs pour l'enlèvement (112) de respectivement une plaque (P) hors du magasin, pour l'amenée (114) de la plaque (P) aux rouleaux porte-lame (120), et pour la suite du transport (116, 118) de la plaque (P) à la suite des rouleaux porte-lame (120), les systèmes pousseurs (112, 114, 116, 118) déplaçant la plaque (P) essentiellement dans une direction perpendiculaire à sa direction longitudinale.

9. Dispositif selon l'une des revendications 6 à 8, **caractérisé en ce que** les systèmes (100) pour la fourniture des plaques (P) présentent les autres caractéristiques suivantes :
- un premier système de transport (152) pour le transport d'une première plaque (P) fournie essentiellement dans sa direction longitudinale ;
- un deuxième système de transport (154) pour le transport d'une deuxième plaque (P) fournie, qui suit la première plaque (P), essentiellement dans sa direction longitudinale ;
- le premier système de transport (152) transportant, à la suite du deuxième système de transport (154), une plaque (P) fournie suivante qui suit la deuxième plaque (P) ;
- le premier et le deuxième système de transport (152, 154) étant disposés de telle sorte que les plaques (P) sont transportées sur la même trajectoire de transport de telle sorte que chaque plaque (P) se joint par liaison de forme à la plaque (P) qui la précède ;
- systèmes de commande pour la commande des premier et deuxième systèmes de transport (152, 154) de telle sorte que les plaques (P) transportées sont respectivement d'abord accélérées puis freinées de nouveau.

10. Dispositif selon la revendication 9, **caractérisé en ce que** le premier et le deuxième système de transport présentent respectivement au moins une courroie de transport (152, 154), la première plaque (P) reposant sur la courroie de transport (152) du premier système de transport, et la deuxième plaque (P) reposant sur la courroie de transport (154) du deuxième système de transport respectivement essentiellement sans friction, et chaque courroie de transport (152, 154) présentant au moins un entraîneur auquel la plaque (P) est adjacente.

11. Dispositif selon la revendication 10, **caractérisé en ce que** la courroie de transport (152, 154) de chaque système de transport a, dans la zone dans laquelle repose la plaque (P), une surélévation de telle sorte que la plaque (P) qui est posée ne touche pas la courroie de transport (152, 154), disposée à côté, de l'autre système de transport respectif.

12. Dispositif selon l'une des revendications 8 à 11, **caractérisé par** des systèmes pousseurs (118) pour le transfert des plaques (P) fournies à la suite des rouleaux porte-lame (120) au premier ou au deuxième système de transport (152, 154), les systèmes pousseurs (118) déplaçant les plaques (P) essentiellement dans une direction perpendiculaire à leur direction longitudinale.

13. Dispositif selon l'une des revendications 8 à 12, **caractérisé par** des systèmes (130) disposés, dans la direction du transport, devant les rouleaux porte-lame (120) pour l'orientation des plaques (P) de telle sorte que les plaques (P) ne peuvent présenter une partie saillante qu'à une de leurs extrémités dans la direction longitudinale, partie saillante qui est découpée lors de la production des cannelures (R).

14. Dispositif d'emballage d'objets en forme de bandes, en particulier d'objets appropriés pour la consommation, en particulier des tablettes de chewing-gum, **caractérisé par** les caractéristiques suivantes :
- un dispositif pour la fabrication d'objets en forme de bandes (S) individuels selon l'une des revendications 6 à 13 ;
- systèmes (300) pour l'emballage des objets en forme de bandes (S) individuels fabriqués, avec un premier matériau d'emballage (V1) ;
- systèmes (400) pour la formation d'un groupe (G) d'objets en forme de bandes (VS) emballés individuels ;
- systèmes (500) pour l'emballage du groupe (G) formé d'objets en forme de bandes (VS), avec un deuxième matériau d'emballage (V2).

15. Dispositif selon la revendication 14, **caractérisé en ce que** les systèmes (400) pour la formation d'un groupe (G) d'objets en forme de bandes (VS) emballés individuels présentent des systèmes (410) pour la formation d'une pile (G) de plusieurs objets en forme de bandes (VS) placés les uns sur les autres.

16. Dispositif selon la revendication 15, **caractérisé en ce que** les systèmes (400) pour la formation d'une pile (G) d'objets en forme de bandes (VS) présentent un tambour collecteur (410) avec plusieurs passages (piste à plusieurs passages), tous les passages du tambour collecteur (410) tournant autour d'un axe commun, chaque passage étant mobile par rapport aux autres passages du tambour collecteur (410), chaque passage présentant plusieurs poches collectrices (420, 430, 440), chaque poche collectrice (420, 430, 440) présentant plusieurs cases (460) pour recevoir respectivement un objet en forme de bandes (VS), et le nombre de cases (460) correspondant au nombres d'objets en forme de bandes (VS) dans une pile (G) à former.

17. Dispositif selon la revendication 16, **caractérisé en ce que** le tambour collecteur (410) présente trois passages avec respectivement trois poches collectrices (420, 430, 440) avec respectivement cinq cases (460).

18. Dispositif selon la revendication 14, **caractérisé en ce que** les systèmes (400) pour la formation d'un groupe (G) d'objets en forme de bandes (VS) emballés individuels présentent des systèmes pour l'agencement de façon juxtaposée de plusieurs objets en forme de bandes (VS).

19. Dispositif selon l'une des revendications 14 à 18, **caractérisé en ce que** les systèmes (300) pour l'emballage des objets en forme de bandes (S) individuels fabriqués avec un premier matériau d'emballage (V1) et les systèmes (500) pour l'emballage du groupe (G) formé d'objets en forme de bandes (VS) avec un deuxième matériau d'emballage (V2) présentent respectivement des systèmes (320, 322 ; 520, 522) pour l'amenée d'un tronçon de matériau d'emballage, et des systèmes (350 ; 550, 556) pour un pliage de parties saillantes du tronçon de matériau d'emballage tout autour des objets en forme de bandes (VS) individuels à emballer ou tout autour de groupes (VG) d'objets en forme de bandes (VS).
